# EUROPÄISCHE PATENTSCHRIFT

(11) **EP 0 840 949 B1**
(45) Veröffentlichungstag und Bekanntmachung des Hinweises auf die Patenterteilung: **20.10.1999**
(21) Anmeldenummer: 96914196.9
(22) Anmeldetag: 10.05.1996
(51) Int. Cl.: H02P 7/62, H02M 5/45, H02M 7/19

(54) **STROMRICHTERANTRIEB**
POWER CONVERTER DRIVE
DISPOSITIF D'ENTRAINEMENT DE CONVERTISSEUR DE PUISSANCE

(30) Priorität: 26.05.1995 DE 19519424
(43) Veröffentlichungstag der Anmeldung: 13.05.1998
(73) Patentinhaber: STN ATLAS Elektronik GmbH, 28309 Bremen (DE)
(72) Erfinder: Kranert, Klaus, Dr., 22559 Hamburg (DE)
(86) Internationale Anmeldenummer: EP9602004
(87) Internationale Veröffentlichungsnummer: WO9637946

(56) Entgegenhaltungen:
- EP-A- 0 087 115
- EP-A- 0 478 809
- CH-A- 557 614
- SIEMENS REVIEW, Bd. 45, Nr. 1, Januar 1978, ERLANGEN DE, Seiten 3-8, XP002011556 THEODOR SALZMANN: "Cycloconverters and automatic control of ring motors driving tube mills"
- PATENT ABSTRACTS OF JAPAN Bd. 005, Nr. 055 (E-052) 16 April 1981 & JP,A,56 006 694 (HITACHI LTD) 23 Januar 1981

## Beschreibung

Die Erfindung betrifft einen Stromrichterantrieb für Arbeitsaggregate mit sog. Propellerkennlinie, wie Schiffsschrauben, Pumpenräder, Großlüfterräder u. dgl., der im Oberbegriff des Anspruchs 1 definierten Gattung.

Solche Stromrichterantriebe werden bevorzugt in dieselelektrischen Schiffsantriebsanlagen eingesetzt und sind an einem Drehstrom-Fahrnetz, das vorzugsweise in zwei miteinander kuppelbare Fahrschienen aufgeteilt ist, angeschlossen. Jede Fahrschiene wird von einer gleichen Anzahl von Synchrongeneratoren gespeist, die von Dieselmotoren angetrieben werden. Die Fahrnetzspannung kann dabei im Hochspannungsbereich, z. B. 3,3 kV, 6 kV, 10 kV, aber auch im Niederspannungsbereich, z. B. 440 V, 660 V, liegen. Schiffsantriebsanlagen mit Stromrichterantrieben der eingangs genannten Art sind im Handbuch der Werften, 1990, Schiffahrtsverlag Hansa, K. Kranert, "Elektrische Schiffshauptantriebe mit Drehstromtechnik" beschrieben. Weiter finden sich Beispiele solcher elektrischer Schiffshauptantriebe in ABB-Technik, 1992, Heft 3, Seiten 3 bis 23. Stromrichter für elektrische Schiffspropellerantriebe großer Leistung in Ausbildung als Direktumrichter (D-Umrichter) und ihre Steuerung sind in Schiff & Hafen, 1978, Heft 3, Seiten 249 bis 251, beschrieben.

In Wechselstrom-Triebfahrzeugen der Schweizerischen Bahnen sind sog: Mehrfach-Folgesteuerungen bekannt (ZEV-Glaseres Analen, 1973, Heft 2/3, Seiten 87 bis 96), bei denen die Stromrichter in Teilstromrichter in Serienschaltung aufgelöst sind und wahlweise bis zur vollen Leistung zugeschaltet werden.

Stromrichter mit Nebenwegschaltorganen, die einzelne Halbleiterdrehstrombrücken vorübergehend kurzschließen, sind in den Patentschriften CH 557 614 und US 41 81 932 beschrieben.

Die bekannten Stromrichterantriebe weisen trotz ihrer antriebstechnischen Vorzüge noch Mängel auf. So verschlechtert sich der Leistungsfaktor mit sinkender Drehzahl, was bei Schiffsantriebsanlagen wiederum von den das Fahrnetz speisenden Synchrongeneratoren eine große Scheinleistung, entsprechend verbunden mit großen Kurzschlußströmen, abfordert. Schon bei ca. 70 bis 80 % der Nenndrehzahl haben die Stromrichterantriebe einen sehr hohen Blindleistungsbedarf. Der Wirkungsgrad der Schiffsantriebsanlage verschlechtert sich bei Teillast der Stromrichterantriebe erheblich und beträgt z. B. bei 57 % Nenndrehzahl 90 % und bei 40 % Nenndrehzahl nur noch 75 %. Der Spannungsklirrfaktor im Fahrnetz ist nur mäßig und liegt zwischen 9 und 12 %.

Der Erfindung liegt die Aufgabe zugrunde, einen Stromrichterantrieb der eingangs genannten Art mit geringem zusätzlichen Schaltungsaufwand so zu verbessern, daß die vorstehenden Nachteile beseitigt, zumindest aber wesentlich gemildert sind, so daß beispielsweise im wesentlichen oder überwiegenden Betriebsbereich des Stromrichterantriebs ein Leistungsfaktor von größer 0,92 eingehalten wird.

Die Aufgabe ist bei einem Stromrichterantrieb der im Oberbegriff des Anspruchs 1 bzw. des Anspruchs 10 angegebenen Gattung erfindungsgemäß durch die Merkmale im Kennzeichenteil des Anspruchs 1 bzw. des Anspruchs 10 gelöst.

Der erfindungsgemäße Stromrichterantrieb hat den Vorteil, daß durch das Kurzschließen des einen Stromrichters eines Stromrichterpaares unterhalb einer festgelegten Grenzdrehzahl und durch das Wiederaufheben des Kurzschlusses mit Überschreiten dieser Grenzdrehzahl die maximale Umrichterausgangsspannung und damit die maximale Motoreinspeisespannung an der Ständerwicklung oder an jeder Wicklungsphase der Ständerwicklung (je nach Ausführung der Umrichter) der Motorspannung in Stufen angepaßt wird und damit in den Halbleiterschaltern der Stromrichter eine kleinere Anschnittsteuerung benötigt wird, was zur Folge hat, daß die Stromrichter weniger Blindstrom aufnehmen und der Leistungsfaktor sich verbessert. Eine Spannungsstufung mit zwei Spannungsstufen ergibt sich bei Kurzschließen von einem Stromrichter des Stromrichterpaares, eine Spannungsstufung mit drei Spannungsstufen bei wechselweisem Kurzschließen des einen und anderen Stromrichters des Stromrichterpaares, wenn an den beiden hintereinandergeschalteten Stromrichtern des Stromrichterpaares unterschiedliche Einspeisespannungen anliegen. Damit läßt sich der wesentliche Betriebsbereich des Synchronmotors im Stromrichterantrieb für einen optimalen Leistungsfaktor einrichten. Dadurch, daß nach Kurzschließen des einen Stromrichters in den Stromrichterpaaren der Synchronmotor von der Regel- und Steuereinrichtung im Bereich von der Drehzahl an, die sich bei maximaler Motoreinspeisespannung aus den verbliebenen, nicht kurzgeschlossenen Stromrichtern ergibt, bis zur Grenzdrehzahl, die vorzugsweise der Drehzahl entspricht, bei der die Drehmomentkennlinie des Synchronmotors die Propellerkennlinie des Antriebsaggregats schneidet, mit Schwächung des Erregerfelds des Synchronmotors gefahren wird, läßt sich der Teilspannungsbereich und damit der Bereich des optimalen Leistungsfaktors vergrößern.

Bei Synchronmotoren, die für ein über dem Nennmoment liegendes Drehmoment ausgelegt sind und damit bereits über einen unmittelbar unterhalb der Nenndrehzahl liegenden Feldschwächungsbereich verfügen, wird gemäß einer bevorzugten Ausführungsform der Erfindung der genannte Drehzahlbereich mit Schwächung des Erregerfeldes bei reduzierter maximaler Motoreinspeisespannung so gelegt, daß er mindestens bis zum Beginn des Drehzahlbereichs der Feldschwächung bei voller Motoreinspeisespannung heranreicht. Auf diese Weise erhält man über einen großen Drehzahlbereich von bespielsweise 40 % der Nenndrehzahl bis nahe Nenndrehzahl einen konstanten Leistungsfaktor cos ϕ>0,92 ohne jeglichen Einbruch bei Umschaltung auf Leistungsfahrt.

Insbesondere bei Verwendung des erfindungsgemäßen Stromrichterantriebs in Schiffsantriebsanlagen lassen sich erhebliche Energieeinsparungen erzielen, was die Wirtschaftlichkeit des Schiffbetriebs wesentlich steigert. Wenn ein Fahrprofil des Schiffes zu niedriger Fahrt oder Leistung über längere Zeit gegeben ist, wie dies z. B. bei Kreuzfahrtschiffen in Küstenfahrt, Forschungsschiffen in Schleichfahrt, Tankern in Ballastfahrt der Fall ist, können durch Kurzschließen der einen Stromrichter der Stromrichterpaare und beispielsweise Einstellen der Ausgangsspannung der verbleibenden Stromrichter auf 30 bis 40 % der Motornennspannung die Transformatorenverluste der die verbleibenden Stromrichter speisenden Stromrichtertransformatoren auf 30 bis 40 %, die Motorverluste um ca. 20 % und die Verluste in den Stromkabeln und in den das Fahrnetz speisenden Synchrongeneratoren um ca. 25 % gesenkt werden. Auch die Umrichterverluste verringern sich je nach Durchführung des Kurzschlusses mit gesonderten Kurzschlußbrücken oder durch völliges Aufsteuern der Halbleiterschalter des kurzzuschließenden Stromrichters auf ein Drittel im ersten Fall und auf etwas mehr als die Hälfte im zweiten Fall wegen der Parallelität der durchgesteuerten Halbleiter in dem kurzgeschlossenen Stromrichter. Nach einer ersten Einschätzung werden sich die Gesamtverluste der Schiffsantriebsanlage um ca. ein Drittel verringern, zumal die Transformatorenverluste bei niedriger Drehzahl höher bewertet werden müssen, da sie konstant bleiben. Damit steigt der Wirkungsgrad der Schiffsantriebsanlage, der ohne die erfindungsgemäßen Maßnahmen bei 40 % Nenndrehzahl etwa 75 % und bei 57 % Nenndrehzahl ca. 90 % beträgt, mit den erfindungsgemäßen Maßnahmen auf ca. 83 % bei 40 % Nenndrehzahl und auf ca. 91,5 % bei 57 % Nenndrehzahl.

Eine weitere Enegieeinsparung ergibt sich aus der Eigenschaft des erfindungsgemäßen Stromrichterantriebs im gesamten Drehzahlbereich mit einem Leistungsfaktor cos ϕ von größer 0,9 zu fahren. Der verbesserte Leistungsfaktor führt zu einer verbesserten Netzqualität. Der Klirrfaktor im Nennpunkt wird bei 12pulsiger Netzgleichrichtung kleiner 7 % und bei 24pulsiger Netzgleichrichtung kleiner 5 % und nimmt etwa quadratisch mit der Drehzahl (n^{2,3}) ab.

Vorteilhafte Ausführungsformen des erfindungsgemäßen Stromrichterantriebs mit vorteilhaften Ausgestaltungen und Weiterbildungen der Erfindung sind in den nachfolgenden Ansprüchen angegeben.

Gemäß einer vorteilhaften Ausführungsform der Erfindung wird das Kurzschließen des einen Stromrichters in jedem Stromrichterpaar dadurch bewirkt, daß zwischen dem Drehstromnetz und jedem der kurzschließbaren Stromrichter steuerbare Leistungsschalter vorgesehen sind und eine in der Regel- und Steuereinrichtung integrierte Steuereinheit die Leistungsschalter öffnet und die Halbleiterschalter der kurzzuschließenden Stromrichter leitend steuert. Die Leistungsschalter werden bevorzugt im stromlosen Zustand geschaltet, wozu gemäß einer weiteren Ausführungsform der Erfindung die Steuereinheit vor Öffnen bzw. Schließen der Leistungsschalter einen zeitlich begrenzten Steuerbefehl an die Regel- und Steuereinrichtung für die Umrichter und den Synchronmmotor gibt und diese für die Dauer des Steuerbefehls die Halbleiterschalter der kurzzuschließenden Stromrichter sperrt. Damit werden die Leistungsschalter trotz erhöhter Schalthäufigkeit gegen Verschleiß geschützt. Sind die Stromrichter gemäß einer weiteren Ausführungsform der Erfindung über je einen Stromrichtertransformator an dem Drehstromnetz angeschlossen und die Leistungsschalter zwischen Drehstromnetz und Primärseite der Stromrichtertransformatoren angeordnet, so werden zur Vermeidung des sog. Transformatorenrush nach Sperren der Halbleiterschalter und vor Betätigen der Leistungsschalter die Stromrichtertransformatoren ent- bzw. vormagnetisiert.

Gemäß einer alternativen Ausführungsform der Erfindung wird das Kurzzschließen des einen Stromrichters in den Stromrichterpaaren mittels einer Kurzschlußbrücke bewirkt, die von der in der Regel- und Steuereinrichtung integrierten Steuereinheit dem kurzzuschließenden Stromrichter parallelgeschaltet wird, wobei zugleich alle Halbleiterschalter dieses Stromrichters gesperrt werden. Mit solchen Kurzzschlußbrücken, die vorzugsweise durch Leistungsthyristoren realisiert werden, können nicht nur die Leistungsschalter eingespart werden, sondern kann auch gleichzeitig eine Schutzschaltung gegen Fehler in den Umrichtern bzw. in den daran angeschlossenen Sromrichtertransformatoren realisiert werden, wenn gemäß einer weiteren Ausführungsform der Erfindung eine Fehlererkennungsschaltung vorgesehen ist, die bei Auftreten eines Fehlers die Steuereinheit veranlaßt, den fehlerhaften Stromrichter und alle weiteren kurzschließbaren Stromrichter in den Stromrichterpaaren durch Aktivieren der Kurzschlußbrücken zu überbrücken, so daß der Synchronmotor nur noch mit den intakten Stromrichtern bei entsprechend reduzierter maximaler Motoreinspeisespannung betrieben wird. Außerdem verringern sich durch die Kurzschlußbrücken die Umrichterverluste im Teillastbereich, was zu einer Verbesserung des Wirkungsgrades des Stromrichterantriebs im unteren Drehzahlbereich beiträgt.

Gemäß einer bevorzugten Ausführungsform der Erfindung ist jeder Stromrichter über einen Stromrichtertransformator an dem Drehstromnetz angeschlossen. Die Stromrichtertransformatoren sind dabei so ausgebildet, daß an den hintereinandergeschalteten Stromrichtern der Stromrichterpaare unterschiedliche Sekundärspannungen liegen, wobei bei allen Stromrichterpaaren das gleiche Spannungsverhältnis herrscht. Die Stromrichtertransformatoren sind dabei je zur Hälfte mit gleichen und ungleichen Wicklungsschaltgruppen auf Primär- und Sekundärseite versehen und den Stromrichtern so zugeordnet, daß eine gleiche Anzahl der zeitgleich kurzschließbaren Stromrichter den Stromrichtertransformatoren mit gleicher und den Stromrichtertransformatoren mit ungleichen Wicklungsschaltgruppen zugeordnet sind. Durch das Vorsehen der Stromrichtertransformatoren kann bei entsprechender Einstellung der Sekundärspannungen jede gewünschte Reduzierung der maximalen Motoreinspeisespannung durch Kurzschließen eines Stromrichters der Stromrichterpaare vorgenommen werden. Durch die beschriebene Ausbildung und Zuordnung der Stromrichtertransformatoren wird gleichzeitig dafür Sorge getragen, daß auch nach Abschalten der Stromrichtertransformatoren eine gute Netzqualität, also ein kleiner Spannungsklirrfaktor im Drehstromnetz, erhalten bleibt.

Bei als D-Umrichter ausgeführten Umrichtern mit einem Synchronmotor, dessen Ständer nur eine Ständerwicklung aufweist, und damit eine ungradzahlige Anzahl von Stromrichtertransformatoren im Teillastbetrieb abgeschaltet wird, werden gemäß einer weiteren Ausführungsform der Erfindung die Stromrichtertransformatoren so ausgewählt abgeschaltet, daß die verbleibenden Stromrichtertransformatoren zusammen mit dem Stromrichtertransformator für die Felderregerwicklung des Synchronmotors je zur Hälfte gleiche und ungleiche Schaltgruppen aufweisen.

Gemäß einer alternativen Ausführungsform der Erfindung läßt sich eine gute Netzqualität bei Einsparung der Stromrichtertransformatoren auch dadurch erreichen, daß jeder der hintereinandergeschalteten Stromrichter eines Stromrichterpaares an einem anderen Teilnetz des in zwei Teilnetzen unterteilten Drehstromnetzes über eine Kommutierungsdrossel pro Phase angeschlossen ist. Die beiden Teilnetze sind über einen Längstransformator mit einem übersetzungsverhältnis von 1:1 gekoppelt, der so ausgeführt ist, daß er eine Phasendrehung zwischen Primär- und Sekundärseite von 30° erzeugt. Durch den Verzicht auf die Stromrichtertransformatoren muß jedoch in Kauf genommen werden, daß die Reduzierung der maximalen Motoreinspeisespannung der Stromrichter unterhalb der Grenzdrehzahl durch Kurzschließen des einen Stromrichters im Stromrichterpaar unveränderlich auf 50 % festgelegt ist.

Die Erfindung ist anhand von in der Zeichnung dargestellten Ausführungsbeispielen im folgenden näher beschrieben. Es zeigen:
- Fig. 1 bis 4: jeweils einen Schaltplan einer Schiffsantriebsanlage mit Stromrichterantrieben gemäß vier verschiedenen Ausführungsbeispielen,
- Fig. 5 bis 7: jeweils ein Drehzahldiagramm des Stromrichterantriebs bei verschiedenen Auslegungen des Antriebs mit normierter Darstellung von Motordrehmoment, Motorspannung und Leistungsfaktor des Synchronmotors über der Drehzahl,
- Fig. 8: ausschnittweise eine gleiche Darstellung wie in Fig. 2 gemäß einem alternativen Ausführungsbeispiel,
- Fig. 9: ausschnittweise eine gleiche Darstellung wie in Fig. 4 gemäß einem alternativen Ausführungsbeispiel.

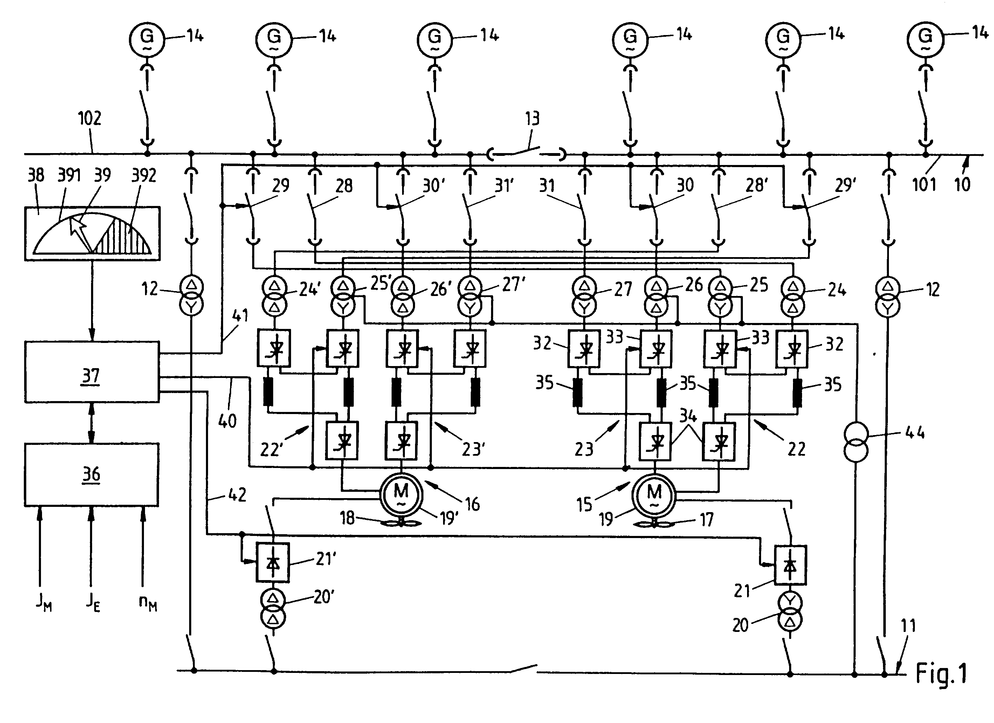

Die in Fig. 1 im Schaltplan dargestellte Schiffsantriebsanlage oder Schiffspropulsionsanlage weist ein Drehstromnetz konstanter Spannung und Frequenz, das sog. Fahrnetz 10, mit einer Fahrnetzspannung von beispielsweise 10 kV sowie ein Bordnetz 11 mit einer Bordnetzspannung von beispielsweise 470 V zur Stromversorgung von bordeigenen Stromverbrauchern auf. Das Bordnetz 11 wird über Bordnetztransformatoren 12 aus dem Fahrnetz 10 gespeist. Das Fahrnetz 10 ist üblicherweise in zwei Teilnetze 101 und 102, auch Fahrschienen genannt, unterteilt, die mittels eines Kupplungsschalters 13 für Notbetrieb miteinander verbunden werden können. Jedes Teilnetz 101, 102 wird von einer gleichen Anzahl von Synchrongeneratoren 14 gespeist, die in bekannter Weise von Dieselmotoren oder Gasturbinen angetrieben werden. Die Schiffsantriebsanlage weist zwei redundante Stromrichterantriebe 15, 16 für jeweils eine Schiffsschraube 17 bzw. 18 auf. Da beide Stromrichterantriebe 15, 16 identisch aufgebaut sind, wird nachfolgend nur der Stromrichterantrieb 15 beschrieben, was in gleicher Weise aber auch für den Stromrichterantrieb 16 gilt.

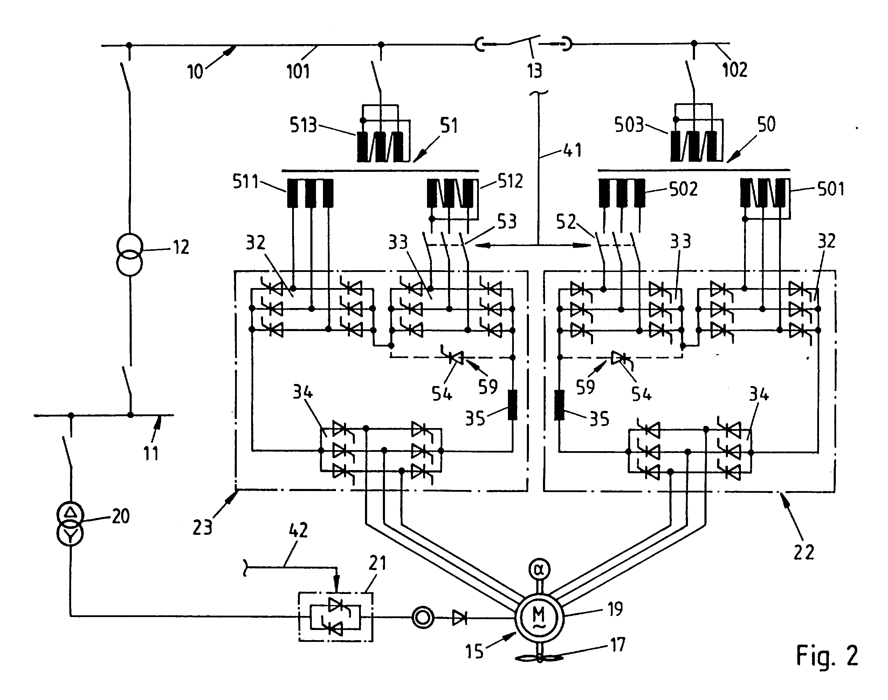

Der Stromrichterantrieb 15 weist einen Synchronmotor 19 mit zwei Ständerwicklungen und einer Felderregerwicklung im Rotor auf, dessen Rotor unmittelbar auf der Propeller- oder Schraubenwelle sitzt. Die Felderregerwicklung wird über einen Transformator 20 und einem steuerbaren Dreiphasengleichrichter 21 aus dem Bordnetz 11 gespeist. Jede Ständerwicklung ist über einen Umrichter 22 bzw. 23, zwei Stromrichtertransformatoren 24, 25 bzw. 26, 27 und zwei Leistungsschalter 28, 29 bzw. 30, 31 an dem Fahrnetz 10 angeschlossen. Die als indirekte Umrichter mit Gleichstromzwischenkreis ausgeführten Umrichter 22, 23, die in Fig. 2 im Detail dargestellt sind, weisen jeweils zwei netzseitig hintereinandergeschaltete, gesteuerte Stromrichter (Gleichrichter) 32, 33 und einen Wechselrichter 34 auf, der über den Gleichstromzwischenkreis mit Drossel 35 mit den beiden hintereinandergeschalteten Stromrichtern 32, 32 verbunden ist. Die Stromrichter 32 und 33 sowie der Wechselrichter 34 sind jeweils mit Halbleiterschaltern, hier Thyristoren, in Drehstrombrückenschaltung ausgeführt. Die Thyristoren werden von einer Regel- und Steuereinrichtung 36 in Anschnittsteuerung betrieben. Hierzu werden der Motorstrom I_{M}, der Erregerstrom I_{E} und die Motordrehzahl n_{M} der Stromrichterantriebe 15, 16 sensiert und der Regel- und Steuereinrichtung 36 als Meßwertsignale zugeführt. Mit der Regel- und Steuereinrichtung 36 ist eine Steuereinheit 37 verbunden bzw. in diese integriert, die ihrerseits mit einem Fahrmanövertelegraph 38 verbunden ist. Der Fahrmanövertelegraph 38, der einen Drehzahl-Sollwerteinsteller darstellt, hat einen Fahrhebel 39, der über einen Fahrhebeleinstellsektor 391 "Energiesparfahrt" und einen Fahrhebeleinstellsektor 392 "Leistungsfahrt" bewegt werden kann und dabei der Steuereinheit 37 eine gewünschte Solldrehzahl für den Schiffsantrieb vorgibt. Die Drehzahl, bei welcher die Sektoren 391, 392 aneinanderstoßen, ist nachfolgend Grenzdrehzahl genannt.

Die Steuereinheit 37 ist über eine Steuerleitung 40 mit den Steuereingängen der Thyristoren in den Stromrichtern 33 der beiden Umrichter 22, 23, über eine Steuerleitung 41 mit den Steuereingängen der steuerbar ausgeführten Leistungsschalter 29 und 30 und über eine Steuerleitung 42 mit den Steuereingängen der Thyristoren des Dreiphasengleichrichters 21 im Erregerkreis des Synchronmotors 19 verbunden. In gleicher Weise gehen die Steuerleitungen 40 bis 42 auch zu den gleichen Bauelementen im Stromrichterantrieb 16, die mit den gleichen Bezugszeichen versehen und lediglich durch einen Beistrich als zu dem Stromrichterantrieb 16 zugehörig gekennzeichnet sind.

Zur Verbesserung des Spannungsklirrfaktors im Fahrnetz 10 sind die zwischen den Stromrichtern 32 und 33 und den Leistungsschaltern 28 bis 31 angeordneten Stromrichter 24 bis 27 so ausgeführt, daß jeweils die Hälfte der Stromrichtertransformatoren 24 bis 27 gleiche und die andere Hälfte der Stromrichtertransformatoren 24 bis 27 ungleiche Wicklungsschaltgruppen auf der Primär- und Sekundärseite aufweisen. Hierzu sind die Wicklungen der Stromrichtertransformatoren 24 und 26 in Dreieck/Dreieck und die der Stromrichtertransformatoren 25 und 27 in Dreieck/Stern geschaltet, wobei die beiden hintereinanderliegenden Stromrichter 32, 33 eines Umrichters 22 bzw. 23 jeweils mit einem in Dreieck/Dreieck und einem in Dreieck/Stern geschalteten Stromrichtertransformator 24 bzw. 25 bzw. 26 und 27 verbunden sind. Dabei sind in bekannter Weise die Stromrichtertransformatoren 24, 25 des Umrichters 22 und die Stromrichtertransformatoren 26, 27 des Umrichters 23 an je einem der beiden Teilnetze 101 und 102 angeschlossen. Die Zuordnung der über die Steuerleitung 41 betätigbaren Leistungsschalter 29 und 30 und die über die Steuerleitung 40 ansteuerbaren Stromrichter 33 in den beiden Umrichtern 22, 23 ist so getroffen, daß bei Öffnen der Leistungsschalter 29, 30 jeweils ein Stromrichtertransformator 26 mit gleichen Wicklungsschaltgruppen (Dreieck/Dreieck) und ein Stromrichtertransformator 25 mit ungleichen Wickungschaltgruppen (Dreieck/Stern) auf Primär- und Sekundärseite abgeschaltet werden, am Netz also nach wie vor eine gleiche Anzahl von Stromrichtertransformatoren 24 mit gleichen Wicklungsschaltgruppen (Dreieck/Dreieck) und Stromrichtertransformatoren 27 mit ungleichen Wicklungsschaltgruppen (Dreieck/Stern) verbleibt und somit sich die 12pulsige Netzrückwirkung und der Spannungsklirrfaktor im Fahrnetz 10 nicht ändert.

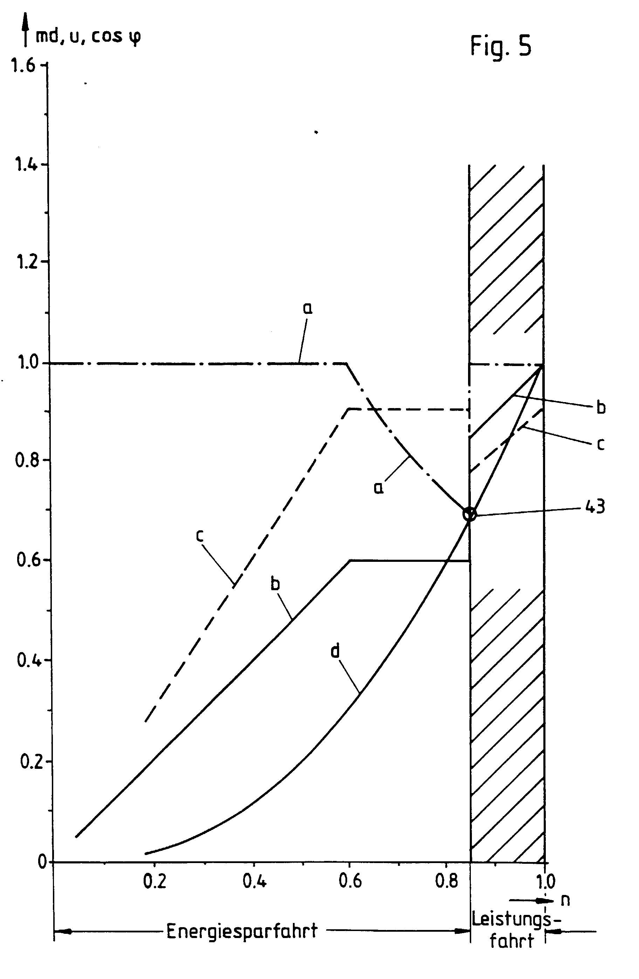

Im Fahrbetrieb bei Stellung des Fahrhebels 39 innerhalb des Sektors 392 "Leistungsfahrt" sind alle Leistungsschalter 28 bis 31, ebenso wie die Leistungschalter 28' bis 31', der beiden Stromrichterantriebe 15, 16 geschlossen und jeder Stromrichterantrieb 15, 16 arbeitet in der bekannten Weise. Der Synchronmotor 19 bzw. 19' zeigt in dem Diagramm der Fig. 5 im schraffierten Bereich "Leistungsfahrt" die bekannten Kennlinien von Motordrehmoment md, Motorspannung u und Leistungsfaktor cos ϕ in Abhängigkeit von der Drehzahl n. Die Kennlinien sind auf Nennwerte normiert. Bei n/n_{N} = 1,0 ist die Nenndrehzahl n_{N} erreicht. a stellt die Kennlinie für das Motordrehmoment md, b die Kennlinie für die Motorspannung u und c die Kennlinie für den Leistungsfaktor cos ϕ dar. Mit d ist die Propellerkennlinie der Schiffsschraube 17 bzw. 18 gekennzeichnet.

Wird der Fahrhebel 39 über die den Sektor 391 von dem Sektor 392 trennende Grenzdrehzahl hinweg, die etwa bei 85 % der Nenndrehzahl liegt, in den Sektor 391 "Energiesparfahrt" verstellt, so wird mit Erreichen der Grenzdrehzahl von der Steuereinheit 37 zunächst der Gleichrichter 21 im Erregerstromkreis des Synchronmotors 12 angesteuert und die Erregerspannung abgesenkt. Sind die die Umrichter 22 und 23 speisenden Stromrichtertransformatoren 24 bis 27 so ausgelegt, daß die Stromrichtertransformatoren 25, 26 jeweils 40 % der Zwischenkreisspannung liefern, wird der Gleichrichter 21 so eingestellt, daß die Motorspannung u auf 60 % heruntergefahren wird. Danach werden von der Steuereinheit 37 über die Steuerleitung 41 die Leistungsschalter 29 und 30 (entsprechend die Leistungsschalter 29' und 30') geöffnet und die Thyristoren der Stromrichter 33 in den beiden Umrichtern 22, 23 durchgesteuert. Damit sind die Stromrichtertransformatoren 25 und 26 abgeschaltet, und der eine Stromrichter 33 der beiden Stromrichterpaare 32, 33 in den Umrichtern 22, 23 ist kurzgeschlossen. Die maximale Zwischenkreisspannung (und damit die maximale Umrichterausgangsspannung), die nur noch von dem Stromrichter 32 in jedem der Umrichter 22, 23 bestimmt wird, sinkt damit auf 60 %. Eine Drehzahlregelung des Motors ist nunmehr von 0 bis 60 % der Nenndrehzahl bei vollem Fluß und Nennstrom möglich, wobei volles Motordrehmoment erhalten wird (vgl. strichpunktierte Kennlinie a in Fig. 5). Bei 60 % Nenndrehzahl liegt der Leistungsfaktor cos ϕ bei 0,92 und erreicht damit den Wert, den er lediglich im Nennpunkt aufweist (vgl. strichlinierte Kennlinie c in Fig. 5) Es sei angemerkt, daß bei nicht kurzgeschlossenen Stromrichtern 33, also bei voller, nicht reduzierter Zwischenkreisspannung in den Umrichtern 22, 23, der Leistungsfaktor bei 60 % Nenndrehzahl auf 0,57 abgefallen wäre, da er dann linear mit der Drehzahl abnimmt, und auch bei kleineren Drehzahlen weit unter dem cos ϕ gemäß Kennlinie c in Fig. 5 liegen würde. Es wird also eine deutliche Verbesserung des Leistungsfaktors unterhalb der Grenzdrehzahl erreicht. Um von der durch die reduzierte maximale Zwischenkreisspannung vorgegebenen maximalen Drehzahl von 0,6 n_{N} zu höheren Drehzahlen zu gelangen, wird bei Verstellen des Fahrhebels 39 in Richtung zur Grenzdrehzahl hin der Synchronmotor 19 durch die Regel- und Steueeinrichtung 36 mit Schwächung des Erregerfelds gefahren. Wie Fig. 5 zeigt, fällt dadurch die strichpunktiert dargestellte Drehmomentkennlinie a des Synchronmotors 19 ab und schneidet die Propellerkennlinie d im Schnittpunkt 43, wenn die Grenzdrehzahl von ca. 0,85 n_{N} am Übergang zur Leistungsfahrt erreicht ist. In diesem Bereich der Feldschwächung von der Drehzahl n=0,6 n_{N} bis zur Grenzdrehzahl 0,85 n_{N}, bei der die Drehmomentkennlinie a des Synchronmotors 19 die Propellerkennlinie d schneidet, wird der Leistungsfaktor von 0,92 konstant beibehalten und sinkt erst bei Wiederaufheben des Kurzschlusses mit Übergang in den Sektor 392 "Leistungsfahrt" auf 0,78 ab. Der Bereich des konstanten, großen Leistungsfaktors, der im Diagramm der Fig. 5 von 60 % Nenndrehzahl an erreicht wird, läßt sich zu kleineren Drehzahlen hin durch eine größere Unsymmetrie der Transformatorenspannungen ausdehen, wobei die größere Transformatorspannung dem kurzzuschließenden Stromrichter 33 der beiden Stromrichterpaare 32, 33 zugeordnet wird. Dies wird dann angewendet, wenn das Fahrprofil des von den Stromrichterantrieben 15, 16 angetriebenen Schiffes z. B. überwiegend Schleichfahrt vorgibt.

Grundsätzlich läßt sich annähernd der gesamte Betriebsbereich des Stromrichterantriebs 15 bzw. 16 für einen optimalen cos ϕ einrichten. Werden beispielsweise auch die Stromrichter 32 in den beiden Umrichtern 22, 23 kurzschließbar ausgebildet und auch die Leistungsschalter 28 und 31 von der Steuereinheit 37 geschaltet und die Sekundärspannungen der Stromrichtertransformatoren 24 und 25 bzw. 26 und 27 unterschiedlich, jedoch mit festem Spannungsverhältnis in jedem Umrichter 22, 23 ausgelegt, so kann beim Hochfahren der Drehzahl zuerst der Stromrichter kurzgeschlossen werden, der an dem Stromrichtertransformator mit der größeren Sekundärspannung liegt, dann nach Erreichen der möglichen Höchstdrehzahl der Kurzschluß dieses Stromrichters wieder aufgehoben und der andere Stromrichter, der an dem Stromrichtertransformator mit der kleineren Sekundärspannung liegt, kurzgeschlossen werden und schließlich bei Erreichen der Grenzdrehzahl auch dieser Kurzschluß wieder aufgehoben werden. Bei Übergang zu Leistungsfahrt werden dann wieder beide Stromrichter in Reihe geschaltet.

Um die Leistungsschalter 29, 30 bei der erforderlichen erhöhten Schalthäufigkeit gegen Verschleiß zu schützen, werden diese im stromlosen Zustand geschaltet. Hierzu gibt die Steuereinheit 37 vor Ansteuern der Leistungsschalter 29, 30 der Regel- und Steuereinrichtung 36 einen zeitlich begrenzten Steuerbefehl, während dessen Dauer die Regel- und Steuereinrichtung 36 die Thyristoren der Stromrichter 33 sperrt. Nach Sperren der Thyristoren werden die Leistungsschalter 29, 30 geöffnet und anschließend die Thyristoren der Stromrichter 33, wie beschrieben, zum Kurzschluß des Stromrichters 33 durchgesteuert. Um den sog. Traforush zu vermeiden, werden vor Betätigen der Leistungschalter 29, 30 die Stromrichtertransformatoren 25, 26 ent- bzw. vormagnetisiert. Die Vormagnetisierung erfolgt über einen Transformator 44, der kurzzeitig an das Bordnetz 11 angeschlossen wird. Die Entmagnetisierung kann beispielsweise durch einen an den Stromrichtern 25, 26 angeschlossenen, leerlaufenden Motor erfolgen.

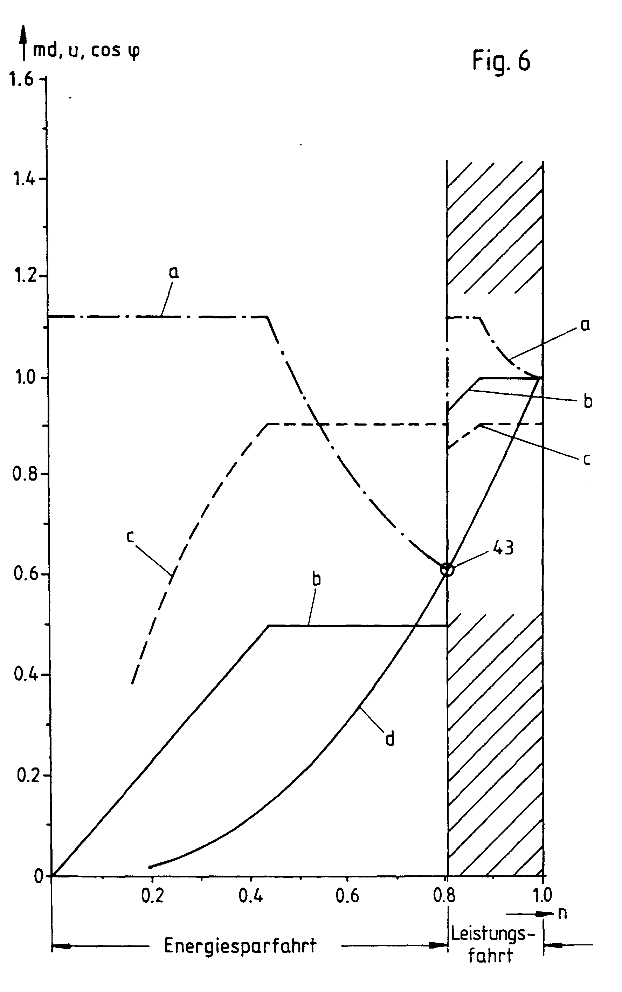

Der Bereich mit großem konstanten Leistungsfaktor cos ϕ innerhalb des Sektors 391 "Energiesparfahrt" läßt sich zu kleineren Drehzahlen hin ausdehnen, wenn man den Synchronmotor 19 für ein über Nennmoment liegendes Drehmoment auslegt und dieser damit über einen unmittelbar unterhalb der Nenndrehzahl liegenden Feldschwächungsbereich verfügt. Die Kennlinien eines solchen Synchronmotors 19 sind in Fig. 6 dargestellt. Der Synchronmotor hat 12,5 % Übermoment und erreicht bei maximaler Motorspannung 87,5 % der Nenndrehzahl (vgl. durchgezogene Kennlinie b in Fig. 6). Von hier aus wird er bis zur Nenndrehzahl mit Feldschwächung betrieben. Die Grenzdrehzahl zwischen dem Fahrhebeleinstellsektor 391 für "Energiesparfahrt" und dem Fahrhebeleinstellsektor 392 für "Leistungsfahrt" ist auf ca. 81 % der Nenndrehzahl eingestellt. Die Sekundärspannungen der die Stromrichter 32 und 33 in den beiden Umrichtern 22 und 23 speisenden Stromrichtertransformatoren 24 bis 27 sind gleich, so daß bei Kurzschließen der Stromrichter 33 die maximale Zwischenkreisspannung in den Umrichtern 22, 23 auf 50 % sinkt. Die mit dieser reduzierten Zwischenkreisspannung bei vollem Fluß und Nennstrom erzielbare maximale Drehzahl liegt bei ca. 44 % der Nenndrehzahl mit einem Leistungsfaktor von cos ϕ≈0,92. Die Drehzahlerhöhung bis zur Grenzdrehzahl erfolgt wiederum durch Feldschwächung des Synchronmotors 19, wobei sich die Absenkung in der strichpunktiert dargestellten Motordrehmoment-Kennlinie a ergibt, und zwar bis zum Schnittpunkt 43 mit der Propellerkennlinie d bei Grenzdrehzahl. Mit Überschreiten der Grenzdrehzahl wird der Kurzschluß der Stromrichter 33 wieder aufgehoben, und an dem Motor 19 liegt die volle Zwischenkreisspannung bzw. Motoreinspeisespannung. Der Leistungsfaktor cos ϕ fällt bei Grenzdrehzahl auf 0,85 ab (vgl. strichlinierte Linie c in Fig. 6), um mit zunehmender Drehzahl wieder auf 0,92 anzusteigen. Dieser cos ϕ wird im Leistungsfahrtsektor bei 88 % der Nenndrehzahl erreicht, um dann bei erneut einsetzendem Feldschwächungsbetrieb des Synchronmotors 19 bis Nenndrehzahl konstant zu bleiben.

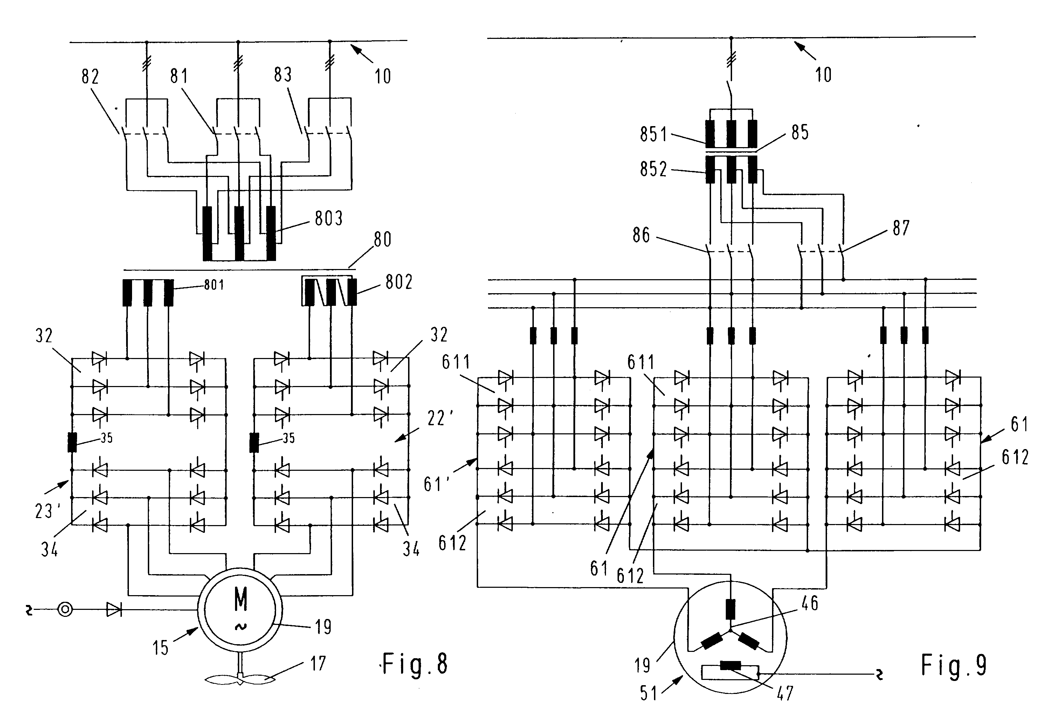

In Fig. 7 sind die Kennlinien eines Stromrichterantriebs dargestellt, wie er in Schiffsantriebsanlagen für Eisbrecher verwendet wird. Der Synchronmotor 19 ist für 50 % Übermoment ausgelegt und erreicht bei Nennspannung 67,5 % der Nenndrehzahl und wird ab hier bis zur Nenndrehzahl mit Feldschwächung betrieben. Die Drehmomentenkennlinie für einen solchermaßen ausgelegten Synchronmotor 19 ist zur Verdeutlichung in Fig. 7 ausgezogen dargestellt und mit a' gekennzeichnet. Die Sekundärspannungen der Transformatoren 24, 25 bzw. 26, 27 sind gleich groß, so daß mit Kurzschließen der Stromrichter 33 und Abschalten der Stromrichtertransformatoren 25, 26 in jedem Umrichter 22, 23 die maximale Zwischenkreisspannung um 50 % zurückgeht. Mit dieser reduzierten maximalen Motoreinspeisespannung im Fahrhebeleinstellsektor 391 "Energiesparfahrt" wird eine maximale Drehzahl von 33,75 % der Nenndrehzahl erreicht. Von hier ab erhöht sich die Drehzahl durch Feldschwächung, wodurch die strichpunktiert dargestellte Momentenkennlinie a bis zum Schnittpunkt 43 mit der Propellerkennlinie d bei der Grenzdrehzahl von 85 % der Nenndrehzahl abfällt. Mit Überschreiten der Grenzdrehzahl wird der Kurzschluß der Stromrichter 33 wieder aufgehoben und der Synchronmotor 19 mit voller Zwischenkreisspannung betrieben (vgl. ausgezogene Kennlinie b in Fig. 7). Bei 85 % Nenndrehzahl hat aber im Synchronmotor 19 bereits die Feldschwächung eingesetzt. Der Synchronmotor 19 erreicht bei Nenndrehzahl sein Nenndrehmoment im Schnittpunkt 45 der Propellerkennlinie d', die für Fahrt im Eis gilt. Der Leistungsfaktor dieses Stromrichterantriebs ist über einen weiten Drehzahlbereich, der von 33,75 % der Nenndrehzahl bis zur Nenndrehzahl reicht, konstant und größer 0,92 (vgl. strichlinierte Kennlinie c in Fig. 7).

Die das Fahrnetz 10 speisenden Synchrongeneratoren 14 der Schiffsantriebsanlage in Fig. 1 sind so ausgelegt, daß ihre Scheinleistung entsprechend der Summe aus der Nennblindleistung der Umrichter 22, 23 und 22', 23' bei Motornennbetrieb und der Blindleistung des Bordnetzes 11 sowie der Summe aus Nennwirkleistung der Umrichter 22, 23 und 22', 23' und der Wirkleistung des Bordnetzes 11 bemessen ist.

Die in Fig. 2 ausschnittsweise im Schaltplan dargestellte Schiffsantriebsanlage, bei welcher nur einer der redundanten Stromrichterantriebe 15 dargestellt ist, ist gegenüber der in Fig. 1 dargestellten Schiffsantriebsanlage nur hinsichtlich der Stromrichtertransformatoren und der Leistungsschalter modifiziert. Gleiche Bauelemente sind daher mit gleichen Bezugszeichen gemäß Fig. 1 versehen. Die den Umrichtern 22, 23 zugeordneten Stromrichtertransformatoren sind in Fig. 2 zu jeweils einem Dreiwicklungstransformator 50 bzw. 51 mit je einer Oberspannungswicklung 503 bzw. 513 und zwei Unterspannungswicklungen 501, 502 bzw. 511, 512 zusammengefaßt. Die Unterspannungswicklungen 501, 502 bzw. 511, 512 sind abwechselnd in Stern und Dreieck geschaltet und mit jeweils einem der hintereinandergeschalteten Stromrichter 32, 33 der Umrichter 22, 23 verbunden. So ist die mit dem Stromrichter 32 des Umrichters 22 verbundene Unterspannungswicklung 501 des Dreiwicklungstransformators 50 in Dreieck und die mit dem Stromrichter 33 des Umrichters 22 verbundene Unterspannungswicklung 502 in Stern geschaltet. Umgekehrt ist beim Umrichter 23 die mit dem Stromrichter 33 verbundene Unterspannungswicklung 512 des Dreiwicklungstransformators 51 in Dreieck und die mit dem Stromrichter 32 verbundene Unterspannungswicklung 511 in Stern geschaltet. In jedem Umrichter 22, 23 ist wiederum der Stromrichter 33 der beiden hintereinandergeschalteten netzseitigen Stromrichter 32, 33 über die Steuereinheit 37 (Fig. 1) kurzschließbar. Die Oberspannungswicklungen 503 und 513 der beiden Dreiwicklungstransformatoren 50, 51 sind in Dreieck geschaltet und an dem Fahrnetz 10 angeschlossen, wobei wie bei den Stromrichtertransformatoren in Fig.1 der Dreiwicklungstransformator 50 an dem Teilnetz 101 und der Dreiwicklungstransformator 51 an dem Teilnetz 102 liegt. Auch diese beiden Teilnetze 101 und 102 sind für Notbetrieb über den Kupplungsschalter 13 miteinander verbindbar.

Zwischen den kurzschließbaren $tromrichtern 33 in den beiden Umrichtern 22, 23 und den ihnen zugeordneten Unterspannungswicklungen 502 bzw. 512 sind jeweils Leistungsschalter 52, 53 angeordnet, die über die Steuerleitung 41 (wie in Fig. 1 die Leistungsschalter 29, 30) von der Steuereinheit 37 geschaltet werden. In gleicher Weise wie in Fig. 1 werden die Thyristoren der Stromrichter 33 über die hier nicht dargestellte Steuerleitung 40 von der Steuereinheit 37 angesteuert.

Die Wirkungsweise dieses modifizierten Stromrichterantriebs gemäß Fig. 2 entspricht exakt der zu Fig. 1 beschriebenen Wirkungsweise, so daß hierauf nicht näher eingegangen zu werden braucht.

In einer alternativen Ausführungsform des Stromrichterantriebs in Fig. 2, die dort gestrichelt angedeutet ist, können die Leistungsschalter 52 und 53 entfallen und den Stromrichtern 33 der sich durch Hintereinanderschaltung ergebenden Stromrichterpaare 32, 33 in den beiden Umrichtern 22, 23 eine Kurzschlußbrücke 59 parallelgeschaltet sein, die mittels eines Leistungsthyristors 54 realisiert ist. Die Ansteuerung der Thyristoren in den Stromrichtern 33 über die Steuerleitung 40 entfällt und statt dessen werden die Leistungsthyristoren 54 über eine Steuerleitung von der Steuereinheit 37 in Fig. 1 angesteuert. Zum Kurzschließen der Stromrichter 33 bei Übergang des Fahrhebels 39 in Fig. 1 in den Fahrhebeleinstellsektor 391 "Energiesparfahrt" werden mit Unterschreiten der Grenzdrehzahl der Steuereinheit 37 die Leistungsthyristoren 54 durchgeschaltet und gleichzeitig von der Regel- und Steuereinheit 36 die Thyristoren in den Stromrichtern 33 gesperrt. Je nach verwendetem Thyristortyp kann das Sperren entweder durch Steuern der Impulse in die Wechselrichterendlage oder durch Impulssperre bewirkt werden. Die Stromrichter 33 sind damit überbrückt und der Gleichstromzwischenkreis wird wie in Fig. 1 nur noch von den Stromrichtern 32 gespeist. Damit ergeben sich die gleichen Verhältnisse wie zu Fig. 1 beschrieben.

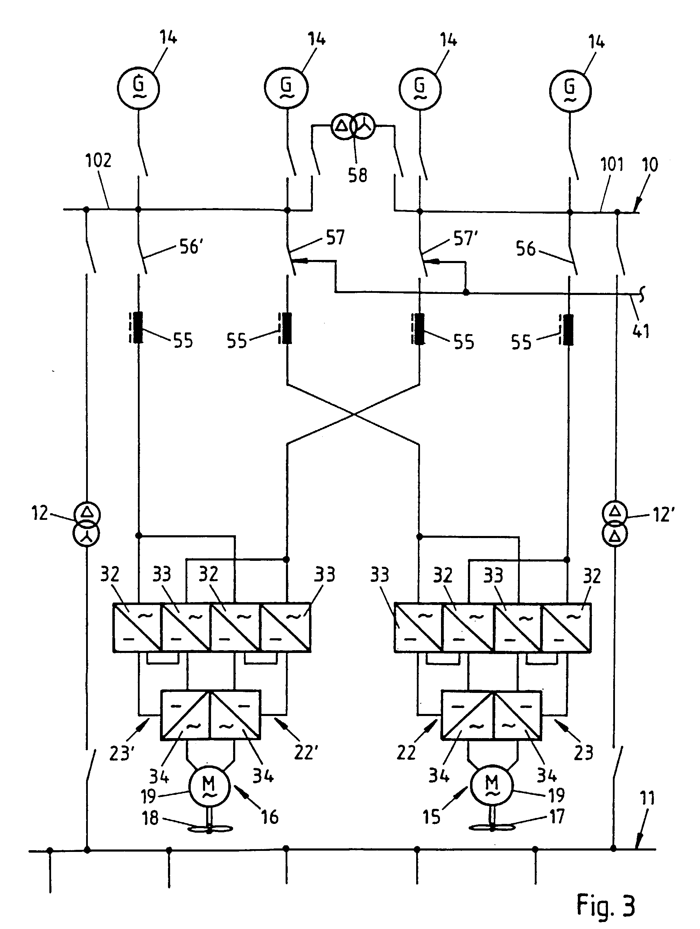

Die in Fig. 3 im Schaltplan dargestellte Schiffsantriebsanlage entspricht der in Fig. 1 dargestellten Schiffsantriebsanlage mit dem Unterschied, daß die Stromrichtertransformatoren 24 bis 27 und 24' bis 27' für die beiden Stromrichterantriebe 15 und 16 entfallen sind. Die Umrichter 22 und 23 des Stromrichterantriebs 15 sind identisch Fig. 1 und 2, ebenso die Umrichter 22' und 23' im Stromrichterantrieb 16. Von den netzseitigen beiden hintereinandergeschalteten Stromrichtern 32 und 33 in jedem Umrichter 22, 23 sind die Stromrichter 33 zum Kurzschließen durch die hier nicht dargestellte Steuereinheit 37 bei Unterschreiten der Grenzdrehzahl eingerichtet. Jeweils die Stromrichter 32 in den beiden Umrichtern 22, 23 und die Stromrichter 33 sind parallelgeschaltet und über je eine Kommutierungsdrossel 55 pro Phase und einem Leistungsschalter 56 mit dem Teilnetz 101 und über einen Leistungsschalter 57 mit dem Teilnetz 102 verbunden. Entsprechend sind die Stromrichter 32 der Umrichter 22' und 23' des Stromrichterantriebs 16 über Kommutierungsdrossel 55 und dem Leistungsschalter 56' mit dem Teilnetz 102 und die Stromrichter 33 über Kommutierungsdrosseln 55 und Leistungsschalter 57' mit dem Teilnetz 101 verbunden. Die Leistungsschalter 57 bis 57' werden wiederum über die Steuerleitung 41 von der Steuereinheit 37 in Fig. 1 betätigt und die Thyristoren der Stromrichter 33 über die Steuerleitung 40 von der Steuereinheit 37 in Fig. 1 angesteuert. Die beiden Teilnetze 101 und 102 sind über einen Längstransformator 58 mit einem Übersetzungsverhältnis von 1:1 und mit einer Dreieck-/Sternschaltung miteinander gekuppelt. Der Längstransformator 58 verursacht eine Phasendrehung der Spannung um 30° zwischen den beiden Teilnetzen 101 und 102, wodurch eine 12pulsige Netzrückwirkung der Stromrichterantriebe 15, 16 mit einem Klirrfaktor von kleiner 10 % ohne Stromrichtertransformatoren erhalten wird. Dieser Spannungsklirrfaktor wird auch im Falle des Kurzschließens der Stromrichter 33 in den vier Umrichtern 22, 23, 22', 23' beibehalten. Die eingangs beschriebene Wirkungsweise der Stromrichterantriebe und die Auslegung der Schiffsantriebsanlage sind unverändert, so daß auch die dortigen Ausführungen auf die Schiffsantriebsanlage gemäß Fig. 3 zutreffen.

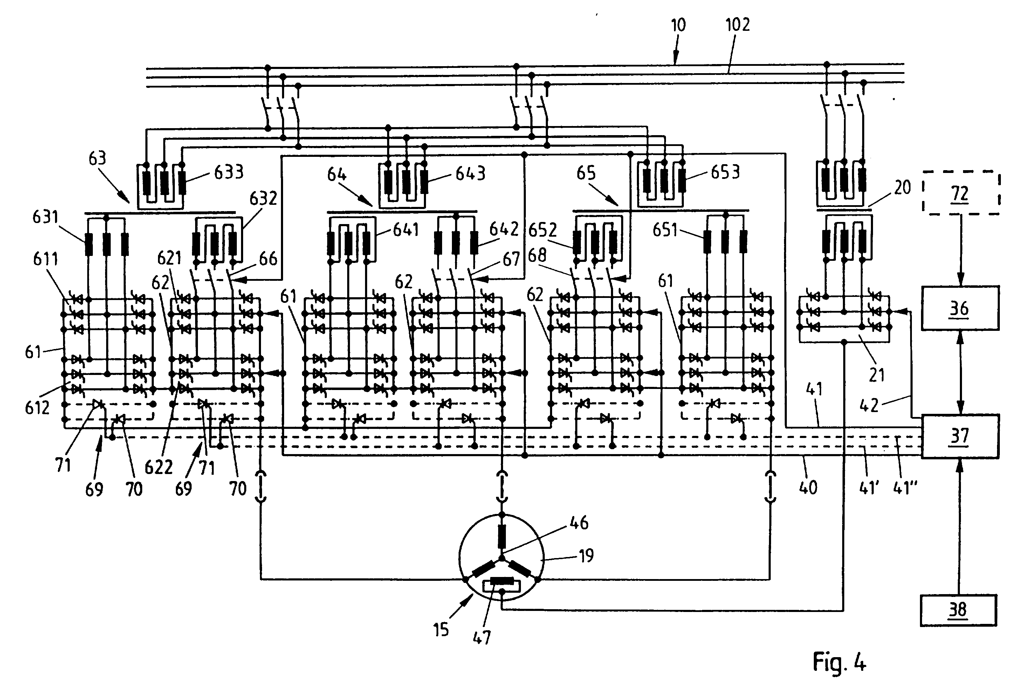

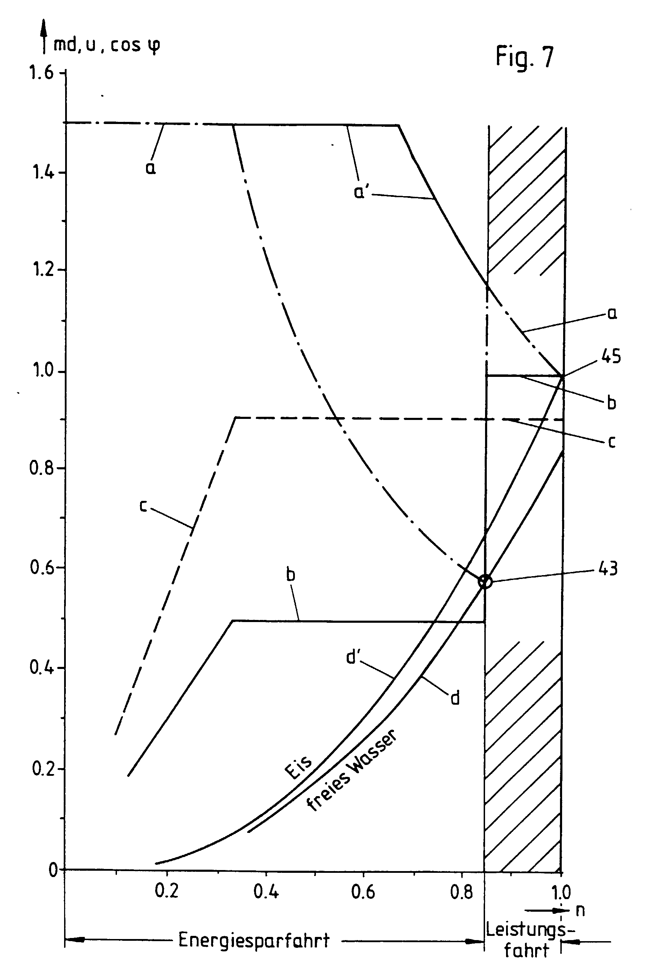

In der In Fig. 4 im Schaltplan dargestellten Schiffsantriebsanlage weist der Synchronmotor 19 des Sromrichterantriebs 15 nur eine einzige Ständerwicklung 46 auf, die in Stern geschaltet ist. Die Erregerwicklung des Synchronmotors 19 ist mit 47 bezeichnet und wird über einen Transformator 20 und einen gesteuerten Dreiphasengleichrichter 21 aus dem Fahrnetz 10 gespeist. Der in der Schiffsantriebsanlage üblicherweise vorhandene redundante zweite Stromrichterantrieb, wie er in Fig. 1 mit 16 bezeichnet ist, ist hier nicht dargestellt. Die die Ständerwicklung 46 über Stromrichtertransformatoren aus dem Drehstromnetz 10 konstanter Spannung und Frequenz speisenden Umrichter sind als direkte Umrichter (D-Umrichter) ausgeführt und weisen pro Wicklungsphase der Ständerwicklung 46 zwei hintereinandergeschaltete Stromrichter 61, 62 auf, die jeweils aus zwei antiparallel geschalteten Drehstrombrücken 611 und 612 bzw. 621 und 622 mit gesteuerten Halbleiterschaltern, hier Thyristoren, bestehen. Die Stromrichtertranformatoren sind wie in Fig. 2 als Dreiwicklungstransformatoren 63 bis 65 mit jeweils einer in Dreieck geschalteten Oberspannungswicklung 633 bzw. 643, bzw. 653 und zwei Unterspannungswicklungen 631, 632 bzw. 641, 642 bzw. 651, 652, von denen jeweils eine in Stern und eine in Dreieck geschaltet ist. Von jedem Dreiwicklungstransformator 63 bis 65 ist eine der beiden Unterspannungswicklungen 631 bzw. 641 bzw. 651 mit dem einen Stromrichter 61 und die andere Unterspannungswicklung 632 bzw. 642 bzw. 652 mit dem anderen Stromrichter 62 eines jeden Stromrichterpaars aus den beiden hintereinandergeschalteten Stromrichtern 61, 62 verbunden. Wie bei der Schiffsantriebsanlage in Fig. 1 werden die Thyristoren der Stromrichter 61 62 sowie der Synchronmotor 19 von einer Regel- und Steuereinrichtung 36 gesteuert. Zwischen den Stromrichtern 62 der drei Stromrichterpaare 61, 62 und den ihnen zugeordneten Unterspannungswicklungen 632 bzw. 642 bzw. 652 sind Leistungsschalter 66 bzw. 67 bzw. 68 eingeschaltet, die von einer in der Regel- und Steuereinrichtung 36 integrierten Steuereinheit 37 betätigt werden. Die Thyristoren dieser Stromrichter 62 sind über eine Steuerleitung 40 von der Steuereinheit 37 derart steuerbar, daß sie vollständig leitend geschaltet werden. In gleicher Weise wie in Fig. 1 beeinflußt die Schalteinheit 37 über die Steuerleitung 42 den Dreiphasengleichrichter 21 für die Felderregerspannung des Synchronmotors 19. An der Steuereinheit 37 ist der Fahrmanövertelegraph 38 angeschlossen, wie dies zu Fig. 1 beschrieben ist.

Die zu Fig. 1 gemachten Ausführungen treffen in gleicher Weise auch für den in Fig. 4 dargestellten Stromrichterantrieb 15 zu mit dem Unterschied, daß mit Kurzschließen der Stromrichter 62 in den drei Stromrichterpaaren 61, 62 und dem Öffnen der Leistungsschalter 66 bis 68 bei Unterschreiten der vorgegebenen Grenzdrehzahl zwecks Reduzierung der maximalen Umrichterausgangsspannung nunmehr die maximale Motoreinspeisespannung pro Wicklungsphase der Ständerwicklung 46 (anstelle der Zwischenkreisspannung in Fig. 1 bis 3) entsprechend reduziert wird. Insofern ist bei der Anwendung der Ausführungen aus Fig. 1 auf Fig. 4 der Begriff "Zwischenkreisspannung" durch die Motoreinspeisespannung pro Wicklungsphase zu ersetzen. Die Diagramme der Fig. 5 bis 7 und die hierzu gegebenen Erläuterungen gelten in gleicher Weise für den in Fig. 4 dargestellten Stromrichterantrieb 15. Jeder der Dreiwicklungsgeneratoren 63 bis 65 kann selbstverständlich durch zwei separate Stromrichtertransformatoren wie in Fig. 1 ersetzt werden, wobei jeder Stromrichter 61 und 62 mit einem gesonderten Stromrichtertransformator verbunden ist. Die Wicklungen der einzelnen Stromrichtertransformatoren sind dann wie die Wicklungen der Dreiwicklungstransformatoren 61 bis 63 auszuführen.

Um einen guten Spannungsklirrfaktor im Drehstromnetz 10 auch bei niedriger Drehzahl im Fahrhebeleinstellsektor "Energiesparfahrt" bei kurzgeschlossenen Stromrichtern 62 und damit reduzierter Motorphasen-Speisespannung zu erhalten, sind die Unterspannungswicklungen 631, 632 bzw. 641, 642 bzw. 651, 652 der Dreiwicklungstransformatoren 63 bis 65 den hintereinandergeschalteten Stromrichtern 61, 62 in jeder Wicklungsphase so zugeordnet, daß mit Kurzschließen der drei Stromrichter 62 die drei verbleibenden, die Ständerwicklung 46 speisenden Stromrichter 61 zusammen mit dem Dreiphasengleichrichter 21 im Erregerfeld des Synchronmotors 19 je zur Hälfte von Transformatoren gespeist werden, die auf Primär- und Sekundärseite ungleiche Wicklungsschaltgruppen (Dreieck/Stern) und je zur Hälfte von Stromrichtern gespeist werden, die auf der Primär- und Sekundärseite gleiche Wicklungsschaltgruppen (Dreieck/Dreieck) aufweisen. In Fig. 4 werden die Stromrichtertransformatoren mit den ungleichen Wicklungsschaltgruppen von der Oberspannungswicklung 633 und der Unterspannungswicklung 631 des Stromrichtertransformators 63, und von der Oberspannungswicklung 653 und der Unterspannungswicklung 651 des Stromrichtertransformators 65 und die Stromrichtertransformatoren mit gleichen Wicklungsschaltgruppen von der Oberspannungswicklung 643 und der Unterspannungswicklung 641 des Stromrichtertransformators 64 sowie dem Transformator 20 für den Dreiphasengleichrichter 21 gebildet.

In einer Abwandlung des Stromrichterantriebs 15 in Fig. 4, die dort strichliniert eingezeichnet ist, entfallen die Leistungsschalter 66 bis 68 mit der Steuerleitung 41 zur Schalteinheit 37, und die Sekundärwicklungen 632, 642 und 652 sind fest mit dem jeweiligen Stromrichter 62 verbunden. Jedem Stromrichter 62 ist eine Kurzschlußbrücke 69 parallelgeschaltet, die aus zwei antiparallelen Leistungsthyristoren 70, 71 besteht. Die Steuerelektroden der Leistungsthyristoren 70, 71 sind über eine Steuerleitung 41' mit der Schalteinheit 37 verbunden. Wie bereits zu Fig. 2 beschrieben, wird mit Unterschreiten der Grenzdrehzahl das Kurzschließen der Stromrichter 62 durch Aufsteuern der Leistungsthyristoren 70, 71 und gleichzeitiges Sperren der Thyristoren in den beiden antiparallelen Drehstrombrücken 621 und 622 bewirkt.

Weiterhin können auch den zweiten Stromrichtern 61 jedes Stromrichterpaares gleichartige Kurzschlußbrücken 69 aus zwei antiparallelen Leistungsthyristoren 70, 71 parallelgeschaltet sein, die über eine Steuerleitung 41" von der Schalteinheit 37 gesteuert werden. Wie bereits zu Fig. 1 ausgeführt worden ist, läßt sich durch wechselweises Kurzschließen der Stromrichter 61 und 62 im Fahrhebeleinstellsektor "Energiesparfahrt" der gesamte Betriebsbereich für einen optimalen Leistungsfaktor einrichten, wenn die Ausgangsspannungen der Unterspannungswicklungen 631, 632 bzw. 641, 642 bzw. 651, 652 sehr unterschiedlich aber in jedem Dreiwicklungstransformator 63 bis 65 mit gleichem Spannungsverhältnis ausgelegt werden. Beim Hochfahren der Drehzahl wird dann erst die Unterspannungswicklung mit der kleinen Spannung zur Einspeisung in die Wicklungsphase der Ständerwicklung 46 herangezogen und der Stromrichter mit der größeren Transformatorspannung kurzgeschlossen, nach Erreichen der möglichen Höchstdrehzahl mit dieser Spannung wird der Stromrichter mit der kleineren Speisespannung kurzgeschlossen und der Stromrichter mit der größeren Transformatorspannung übernimmt die Spannungsversorgung der Wicklungsphase. Bei Überschreiten der Grenzdrehzahl werden dann im Fahrhebeleinstellsektor "Leistungsfahrt" beide Transformatorspannungen der Unterspannungswicklungen über die zugeordneten Stromrichter in Reihe geschaltet.

In Ergänzung des in Fig. 4 dargestellten Stromrichterantriebs 15 kann, wie dies in Fig. 4 gestrichelt eingezeichnet ist, ein Netzschutzsystem 72 mit Fehlererkennungsschaltung vorgesehen werden, das über die Regel- und Steuereinrichtung 36 mit der Steuereinheit 37 kommuniziert. Tritt ein Fehler in den Stromrichtern 61, 62 der einzelnen Stromrichterpaare oder in den diesen zugeordneten Stromrichtertransformatoren 63 bis 65 auf, so wird dieser Fehler von dem Netzschutzsystem 72 erkannt und lokalisiert. Das Netzschutzsystem 72 veranlaßt die Steuereinheit 37 durch Ansteuern der Kurzschlußbrücken 69 den fehlerbehafteten Stromrichter und alle mit diesem gleichartige Stromrichter in den Stromrichterpaaren 61, 62 kurzzuschließen und durch Sperren der Thyristoren dieser Stromrichter die zugehörigen Stromrichtertransformatoren abzuschalten. Ist beispielsweise in Fig. 4 der Stromrichter 61 des an dem Dreiwicklungstransformator 63 angeschlossenen Stromrichterpaares 61, 62 defekt, so werden von der Steuereinheit 37 alle Thyristoren in den antiparallelen Drehstrombrücken 611 und 612 aller drei Stromrichter 61 gesperrt und die den Stromrichtern 61 zugeordneten Kurzschlußbrücken 69 aktiviert. Der Stromrichterantrieb 19 geht mit den intakten Stromrichtern 62 in Energiesparfahrt über. Selbstverständlich kann ein solches Netzschutzsystem 72 auch bei den in Fig. 1 bis 3 dargestellten Stromrichterantrieben vorgesehen werden, wenn anstelle der Leistungsschalter die Stromrichter mit entsprechenden Kurzschlußbrücken ausgerüstet werden.

Die Erfindung ist nicht auf die beschriebenen Stromrichterantriebe für Schiffsbetrieb beschränkt. So können die Stromrichterantriebe für alle Arbeitsaggregate verwendet werden, die eine sog. Propellerkennlinie aufweisen, also ihr Drehmoment etwa quadratisch mit der Drehzahl (genauer mit n^{2,x}) steigt. Solche Arbeitsaggregate mit Propellerkennlinien sind nicht nur Schiffsschrauben oder Schiffspropeller, sondern auch Pumpenräder und Lüfterräder bei Großlüftern.

In Fig. 8 ist ausschnittweise der Schaltplan einer gleichen Schiffsantriebsanlage wie in Fig. 2 mit als I-Umrichter mit Gleichstromzwischenkreis ausgeführten Umrichtern 22', 23' und mit als Dreiwicklungstransformator ausgeführtem Transformator 80 dargestellt, welche dahingehend modifiziert ist, daß zur Reduzierung der maximalen Umrichterausgangsspannung nicht die Halbleiterschalter in den Umrichtern kurzgeschlossen, sondern die (sekundärseitige) Ausgangsspannung des die Umrichter 22', 23' speisenden Transformators 80 entsprechend reduziert wird. Dies ermöglicht die Einsparung von jeweils zwei Halbleiterbrücken in den beiden Umrichtern 22', 23', so daß der Aufwand an Halbleiterschaltern erheblich abnimmt. Jeder I-Umrichter 22' bzw. 23' besteht - wie üblich - aus dem gesteuerten Stromrichter (Gleichrichter) 32 und dem Wechselrichter 34, der mit diesem über den Gleichstromzwischenkreis mit Drossel 35 verbunden ist. Die beiden Stromrichter 32 sind an je eine der beiden Unterspannungswicklungen 801 und 802 des Transformators 80 angeschlossen, dessen Oberspannungswicklung 803 über steuerbare Leistungsschalter 81, 82, 83 mit dem Fahrnetz 10 verbunden ist. Die Leistungsschalter 82 und 83 führen dabei zu Anzapfungen der Oberspannungswicklung 803, mit welchen die halbe Windungszahl bzw. ein Drittel der Windungszahl abgegriffen wird. Mit Schließen des Leistungsschalters 83 liegt am Ausgang des Transformators 80 die volle sekundäre Ausgangsspannung an, die eine für den Nennbetrieb ausgelegte maximale Motoreinspeisespannung vorgibt. Mit Schließen des Leistungsschalters 82 sinkt die Ausgangsspannung und damit die maximale Motoreinspeisespannung auf zwei Drittel und mit Schließen des Leistungsschalters 81 auf ein Drittel. (Die anderen Leistungsschalter sind jeweils offen). Beschränkt man sich auf die steuerbaren Leistungsschalter 81 und 82 und legt den Transformator 80 so aus, daß er bei geschlossenem Leistungsschalter 82 und offenem Leistungsschalter 81 die erforderliche maximale Motoreinspeisespannung liefert, so liegen die gleichen Verhältnisse vor, wie sie zuvor in Verbindung mit Fig. 6 und 7 beschrieben worden sind. Bei Leistungsfahrt ist der Leistungsschalter 82 geschlossen und der Leistungsschalter 81 offen. Der Synchronmotor 19 ist mit Übermoment ausgelegt und wird mit Feldschwächung betrieben. Für Energiesparfahrt wird der Leistungsschalter 82 geöffnet und der Leistungsschalter 81 geschlossen, so daß bei damit sich verdoppelnder Windungszahl der Oberspannungswicklung 803 die Ausgangsspannung des Transformators 80 und damit die maximale Zwischenkreisspannung in den Umrichtern 22', 23' um 50 % reduziert wird. Die mit dieser reduzierten maximalen Motoreinspeisespannung bei vollem Fluß und Nennstrom erzielbare maximale Drehzahl liegt gemäß Fig. 6 bei ca. 44 % der Nenndrehzahl bei einem Leistungsfaktor von cos ϕ = 0,92. Die Drehzahlerhöhung bis zur Grenzdrehzahl erfolgt durch Feldschwächung des Synchronmotors 19. Die Steuerung der Leistungsschalter 81 und 82 bzw. 83 übernimmt auch hier die Regel- und Steuereinrichtung 36 (vgl. Fig. 1).

In Fig. 9 ist ausschnittweise der Schaltplan einer gleichen Schiffsantriebsanlage wie in Fig. 4 mit als D-Umrichter ausgeführten Umrichtern dargestellt, die in gleicher Weise modifiziert ist, wie vorstehend zu Fig. 8 beschrieben. Übereinstimmende Bauteile in Fig. 4 und 9 sind daher mit den gleichen Bezugszeichen versehen. Jeder Umrichter weist - wie üblich - pro Wicklungsphase der Ständerwicklung 46 des Synchronmotors 19 nur noch einen Stromrichter 61' mit zwei antiparallel geschalteten Drehstrombrücken 611 und 612 auf. Die Zahl der Halbleiterschalter ist damit gegenüber der Schiffsantriebsanlage gemäß Fig. 4 um die Hälfte reduziert. Der D-Umrichter wird von einem Transformator 85 gespeist, dessen Primärwicklung 851 am Fahrnetz 10 liegt. Die Sekundärwicklung 852 des Transformators 85 ist über einen steuerbaren ersten Leistungsschalter 86 mit dem D-Umrichter verbunden. Weiterhin ist eine Wicklungsanzapfung der Sekundärwicklung 852, die im Beispiel auf die Hälfte der Windungszahl gelegt ist, über einen steuerbaren zweiten Leistungsschalter 87 ebenfalls mit dem D-Umrichter verbunden. Die Leistungsschalter 86, 87 werden wiederum von der Steuer- und Regeleinrichtung 36 gesteuert.

Auch bei dieser Schiffsantriebsanlage liegen die gleichen Verhältnisse vor, wie sie zu Fig. 6 und 7 beschrieben sind. Bei Leistungsfahrt ist der Leistungsschalter 86 geschlossen und der Leistungsschalter 87 geöffnet. Bei Energiesparfahrt ist umgekehrt der Leistungsschalter 86 geöffnet und der Leistungsschalter 87 geschlossen. Die Anzapfung der Sekundärwicklung 852 kann beliebig gewählt werden, so daß auch andere Teilspannungen zur Reduzierung der maximalen Motoreinspeisespannung realisiert werden können. Bei Anzapfung von 60 % der Wicklungszahl der Sekundärwicklung 852 können damit die Verhältnisse herbeigeführt werden, wie sie zu Fig. 5 beschrieben sind.

## Patentansprüche

1. Stromrichterantrieb für Arbeitsaggregate mit sog. Propellerkennlinie, wie Schiffsschrauben, Pumpenräder, Großlüfterräder u. dgl. mit einem Synchronmotor (19), der eine oder zwei Ständerwicklungen besitzt, mit Umrichtern zum Speisen der Ständerwicklungen aus einem Drehstromnetz (10), die entweder als I-Umrichter (22, 23) ausgeführt sind und in Zuordnung zu jeweils einer Ständerwicklung netzseitig zwei hintereinandergeschaltete Stromrichter (32, 33) aus gesteuerten Halbleiterschaltern in Drehstrombrückenschaltung und einen über einen Gleichstromzwischenkreis damit verbundenen motorseitigen Wechselrichter (34) mit gesteuerten Halbleiterschaltern in Drehstrombrückenschaltung aufweisen, oder als D-Umrichter ausgeführt sind und in Zuordnung zu jeweils einer Wicklungsphase einer Ständerwicklung (46) zwei hintereinandergeschaltete Stromrichter (61, 62) aus jeweils zwei antiparallel geschalteten Drehstrombrücken (611, 612 bzw. 621, 622) mit gesteuerten Halbleiterschaltern aufweisen, und mit einer Regel- und Steuereinrichtung (36) für Umrichter und Synchronmotor (19), der ein manuell bedienbarer Drehzahlsollwerteinsteller (38) zugeordnet ist, dadurch gekennzeichnet, daß unterhalb einer unter Nenndrehzahl des Synchronmotors (19) festgelegten Drehzahl (Grenzdrehzahl) in jedem der von den hintereinandergeschalteten Stromrichtern (32, 33; 61, 62) gebildeten Stromrichterpaare zur Reduzierung der maximalen Umrichterausgangsspannung ein Stromrichter (33; 62) kurzgeschlossen ist und der Synchronmotor (19) von der Regel- und Steuereinrichtung (36) im Bereich der Drehzahl, die sich bei maximaler Motoreinspeisespannung aus den verbliebenen, nicht kurzgeschlossenen Stromrichtern (32 61) ergibt, bis hin zur Grenzdrehzahl, vorzugsweise bis zu der Drehzahl, bei der die Drehmomentkennlinie (a) des Synchronmotors (19) die Propellerkennlinie (d) des Antriebsaggregats schneidet, mit Schwächung des Erregerfelds des Synchronmotors (19) gefahren wird.

2. Antrieb nach Anspruch 1, dadurch gekennzeichnet, daß zwischen dem Drehstromnetz (10) und jedem der kurzschließbaren Stromrichter (33; 62) steuerbare Leistungsschalter (29, 29', 30, 30'; 52, 53; 57, 57'; 66 bis 68) vorgesehen sind und daß zum gleichzeitigen Kurzschließen dieser Stromrichter (33; 62) eine in der Regel- und Steuereinrichtung (36) integrierte Steuereinheit (37) die Leistungsschalter (29, 29', 30, 30'; 52, 53; 57, 57'; 66 bis 68) öffnet und die Halbleiterschalter der Stromrichter (33; 62) leitend steuert.

3. Antrieb nach Anspruch 1, dadurch gekennzeichnet, daß jedem der kurzschließbaren Stromrichter (33; 61, 62) eine Kurzschlußbrücke (59; 69) parallelgeschaltet ist und daß zum gleichzeitigen Kurzschließen dieser Stromrichter (33; 61 bzw. 62) eine in der Regel- und Steuereinrichtung (36) integrierte Steuereinheit (37) alle Halbleiterschalter dieser Stromrichter (33; 61 bzw. 62) sperrt und die Kurzschlußbrücken (59; 69) schließt.

4. Antrieb nach Anspruch 3, dadurch gekennzeichnet, daß die Kurzschlußbrücke (59, 60) bei als I-Umrichter ausgeführten Umrichtern (22, 23) einen dem Stromrichter (33) parallelgeschalteten Thyristor (54) und bei als D-Umrichter ausgeführten Umrichtern zwei dem Stromrichter (62 bzw. 61) antiparallel geschaltete Thyristoren (70, 71) aufweist und daß die Steuerelektroden des Thyristors (54) bzw. der Thyristoren (70, 71) mit der Steuereinheit (37) verbunden sind.

5. Antrieb nach einem der Ansprüche 2 bis 4, dadurch gekennzeichnet, daß mit Unterschreiten der Grenzdrehzahl durch die Motordrehzahl (n) des Synchronmotors (19) die Steuereinheit (37) vor Kurzschließen des jeweiligen Stromrichters (33; 62) die Erregerfeldspannung des Synchronmotors (19) soweit reduziert, daß die Motorspannung etwa der maximalen Motoreinspeisespannung des verbliebenen, nicht kurzgeschlossenen Stromrichters (32; 61) des Stromrichterpaares entspricht.

6. Antrieb nach einem der Ansprüche 1 bis 5, dadurch gekennzeichnet, daß bei einem Synchronmotor (19) mit nur einer Ständerwicklung (46) und als D-Umrichter ausgeführten Umrichtern jeder der Stromrichter (61, 62) sowie ein Drehstromgleichrichter (21) für die Felderregerwicklung (47) des Synchronmotors (19) über einen Stromrichtertransformator (63 bis 65, 20) an dem Drehstromnetz (10) angeschlossen sind, daß ein Teil der Stromrichtertransformatoren gleiche und ein Teil ungleiche Wicklungsschaltgruppen auf Primär- und Sekundärseite aufweisen und daß die zeitgleich kurzschließbaren Stromrichter (62) so auf die Stromrichtertransformatoren mit gleichen und ungleichen Wicklungsschaltgruppen aufgeteilt sind, daß mit Kurzschließen der Stromrichter (62) eine gleiche Anzahl der den nicht kurzgeschlossenen Stromrichtern (61) zugeordneten Stromrichtertransformatoren jeweils gleiche und ungleiche Wicklungsschaltgruppen besitzt.

7. Antrieb nach einem der Ansprüche 1 bis 6, dadurch gekennzeichnet, daß der Synchronmotor (19) für ein über Nennmoment liegendes Drehmoment ausgelegt ist und damit über einen unmittelbar unterhalb der Nenndrehzahl (n_{N}) liegenden Feldschwächungsbereich verfügt und daß der Drehzahlbereich, der von der Regel- und Steuereinrichtung (37) unterhalb der Grenzdrehzahl mit Schwächung des Erregerfelds des Synchronmotors (19) gefahren wird, sich bis mindestens zu Beginn des Drehzahlbereichs der Feldschwächung bei voller Motoreinspeisespannung erstreckt.

8. Antrieb nach Anspruch 7, dadurch gekennzeichnet, daß in allen Stromrichterpaaren beide der hintereinandergeschalteten Stromrichter (61, 62) wechselweise kurzschließbar sind und daß die Steuereinheit (37) im unteren Drehzahlbereich die an der höheren Sekundärspannung liegenden Stromrichter (61) und im mittleren Drehzahlbereich die an der niedrigeren Sekundärspannung liegenden Stromrichter (62) in den Stromrichterpaaren kurzschließt.

9. Antrieb nach einem der Ansprüche 2 bis 8 für Schiffsbetrieb, dadurch gekennzeichnet, daß der Drehzahlsollwerteinsteller ein Fahrmanövertelegraph (38) ist, der einen Fahrhebeleinstellsektor (391) für "Energiesparfahrt" und einen Fahrhebeleinstellsektor (392) für "Leistungsfahrt" aufweist, die jeweils von beiden Seiten her bis an die Grenzdrehzahl heranreichen, und daß die Steuereinheit (37) bei Einstellung des Fahrhebels (39) auf den Fahrhebeleinstellsektor (391) für "Energiesparfahrt" aktiviert wird.

10. Stromrichterantrieb für Arbeitsaggregate mit sog. Propellerkennlinie, wie Schiffsschrauben, Pumpenräder, Großlüfterräder u. dgl. mit einem Synchronmotor (19), der eine oder zwei Ständerwicklungen besitzt, mit Umrichtern zum Speisen der Ständerwicklungen über Transformatoren (80; 85) aus einem Drehstromnetz (10), die entweder als I-Umrichter mit einem Gleichstromzwischenkreis oder als D-Umrichter mit antiparallel geschalteten Drehstrombrücken ausgeführt sind und mit einer Regel- und Steuereinrichtung (36) für Umrichter und Synchronmotor (19), der ein manuell bedienbarer Drehzahlsollwerteinsteller (38) zugeordnet ist, dadurch gekennzeichnet, daß unterhalb einer unter Nenndrehzahl des Synchronmotors (19) festgelegten Drehzahl (Grenzdrehzahl) zur Reduzierung der maximalen Umrichterausgangsspannung am Transformator (80; 85) mittels primär- oder sekundärseitig wirkender, gesteuerter Schalter (81 bis 83; 86, 87) eine Teilausgangsspannung eingeschaltet ist und der Synchronmotor (19) von der Regel- und Steuereinrichtung (36) im Bereich der Drehzahl, die sich bei der durch die Teilausgangsspannung reduzierten maximalen Motoreinspeisespannung ergibt, bis hin zur Grenzdrehzahl, vorzugsweise bis zu der Drehzahl, bei der die Drehmomentkennlinie (a) des Synchronmotors (19) die Propellerkennlinie (d) des Antriebsaggregats schneidet, mit Schwächung des Erregerfelds des Synchronmotors (19) gefahren wird.

11. Antrieb nach Anspruch 10, dadurch gekennzeichnet, daß die Teilausgangsspannung am Transformator (80; 85) mittels der primär- oder sekundärseitigen Schalter (81 bis 83; 86, 87) in mehreren Spannungsstufen einschaltbar ist.

12. Antrieb nach Anspruch 10 oder 11, dadurch gekennzeichnet, daß das Drehstromnetz (10) von einer Mehrzahl von Synchrongeneratoren (14) gespeist und aus dem Drehstromnetz (10) ein Schiffsbordnetz (11) mit Bordnetzverbrauchern versorgt ist und daß die Scheinleistung der Synchrongeneratoren (14) entsprechend der Summe aus der Nennblindleistung der Umrichter bei Motornennbetrieb und der Blindleistung des Bordnetzes (11) sowie der Summe aus Nennwirkleistung der Umrichter bei Motornennbetrieb und der Wirkleistung des Bordnetzes (11) ausgelegt ist.

## Claims

1. Power converter drive for working aggregates with a so-called propeller characteristic, e.g. marine screw propellers, pump impellers, high-capacity fan impellers and similar equipment, with a synchronous motor (19) equipped with one or two stator windings, with frequency converters for feeding the stator windings from a three-phase network (10), the frequency converters may be designed as indirect frequency converters (22, 23) having two current source converters (32, 33) on the network side, interconnected in series, associated each to one stator winding, that consist each of controlled semiconductor switches in a three-phase bridge arrangement, and having a current inverter (34) at the motor side with controlled semiconductor switches in a three-phase bridge arrangement connected to the current source converters (32, 33) by a direct current intermediate circuit, or may be designed as direct frequency converters, having two series-connected current source converters (61, 62) interconnected in series, associated each to one winding phase of a stator winding (46), that consist each of two anti-parallel-connected three-phase bridges (611, 612 and 621, 622, respectively) with controlled semiconductor switches, and with a regulating and controlling device (36) for the frequency converters and the synchronous motor (19) associated to a speed of rotation set value regulator (38) designed for manual operation, characterized in that, at a speed of rotation (threshold speed of rotation) set below the nominal speed of the synchronous motor (19), one current source converter (33; 62) of each series-connected current source converter pair (32, 33; 61, 62) will be short-circuited for the reduction of the maximum frequency converter output voltage, and that the synchronous motor (19) will be operated by the regulating and controlling device (36) in the speed range resulting from the maximum motor supply voltage provided by the remaining, non-short-circuited current source converters (32, 61) up to the threshold speed of rotation and preferably up to the speed at which the torque characteristic (a) of the synchronous motor (19) intersects with the propeller characteristic (d) of the driving unit, with weakening of the exciter field of the synchronous motor (19).

2. Drive as per claim 1, characterized in that, between the three-phase network (10) and each of the short-circuitable current source converters (33; 62), a series of controllable power switches (29, 29', 30, 30';52, 53; 57, 57'; 66 to 68) will be installed and that, for simultaneous short-circuiting of these current source converters (33; 62), a control unit (37) integrated into the regulating and controlling device (36) will open the power switches (29, 29', 30, 30'; 52, 53; 57, 57'; 66 to 68) and render the semiconductor switches of the current source converters (33; 62) conductive.

3. Drive as per claim 1, characterized in that each of the short-circuitable current source converters (33; 61, 62) is connected in parallel to a short-circuit bridge (59; 69) and that, for simultaneous short-circuiting of these current source converters (33; 61 or 62), a control unit (37) integrated into the regulating and controlling device (36) will block all semiconductor switches of these current source converters (33; 61 or 62) and close the short-circuit bridges (59; 69).

4. Drive as per claim 3, characterized in that, with frequency converters designed as indirect frequency converters (22, 23), the short-circuit bridge (59, 60) is equipped with a thyristor (54) connected in parallel to the current source converter (33) and that, with frequency converters designed as direct frequency converters, the short-circuit bridge (59, 60) is equipped with two thyristors (70, 71) connected in an antiparallel arrangement to the current source converter (62 or 61) and that the control electrodes of the thyristor (54) or the thyristors (70, 71) are connected to the control unit (37).

5. Drive as per one of claims 2 to 4, characterized in that, as soon as the motor speed (n) of the synchronous motor (19) falls below the threshold speed of rotation, the control unit (37) will proceed, prior to short-circuiting of the associated current source converter (33; 62), to reduce the exciter field voltage of the synchronous motor (19) to such a degree that the motor voltage corresponds approximately to the maximum motor supply voltage of the remaining non-short-circuited current source converter (32; 61) of the current source converter pair.

6. Drive as per one of claims 1 to 5, characterized in that, with a synchronous motor (19) with only one stator winding (46) and with frequency converters designed as direct frequency converters, each of the current source converters (61, 62) as well as one three-phase rectifier (21) for the field exciter winding (47) of the synchronous motor (19) are connected to the three-phase network (10) via a converter transformer (63 to 65, 20), that some of the converter transformers have identical and some have nonidentical vector groups on the primary and on the secondary side and that the current source converters (62) which can be short-circuited simultaneously are distributed over the converter transformers with identical and nonidentical vector groups in such a way that, upon short-circuiting of the current source converters (62), an equal number of converter transformers associated to the non-short-circuited current source transformers (61) will each have identical and nonidentical vector groups.

7. Drive as per one of claims 1 to 6, characterized in that the synchronous motor (19) has been dimensioned for a torque above the nominal torque so that its field-weakening range is situated immediately below the nominal speed (n_{N}) and that the speed range which is controlled by the regulating and controlling device (37) below the threshold speed of rotation with exciter field weakening of the synchronous motor (19), extends at least up to the beginning of the field-weakening speed range at full motor supply voltage.

8. Drive as per claim 7, characterized in that, in all current source converter pairs, both of the series-connected current source converters (61, 62) can be short-circuited alternately and that the control unit (37) short-circuits the current source converters within the current source converter pairs in such a way that, in the lower speed range, the current source converters (61) connected to the higher secondary voltage are short-circuited and, in the mean speed range, the current source converters (62) connected to the lower secondary voltage are short-circuited.

9. Drive as per one of claims 2 to 8 for ship's operation. characterized in that the speed of rotation set value regulator is a maneuver telegraph (38) which has a control lever adjusting segment (391) for "economy operation" and a control lever adjusting segment (392) for "power operation" which both reach, on both sides, up to the threshold speed of rotation, and that the control unit (37) is activated upon setting the control lever (39) to the segment (391) for "economy operation".

10. Power converter drive for working aggregates, with a so-called propeller characteristic, e.g. marine screw propellers, pump impellers, high-capacity fan impellers and similar equipment, with a synchronous motor (19) equipped with one or two stator windings, with frequency converters for feeding the stator windings via transformers (80; 85) from a three-phase network (10) which are designed either as indirect frequency converters with a direct-current intermediate circuit, or as direct frequency converters with anti-parallel-connected three-phase bridge arrangements, with a regulating and controlling device (36) for the frequency converters and the synchronous motor (19) associated to a manually controlled speed of rotation set value regulator (38), characterized in that, below a speed (threshold speed of rotation) set below the nominal speed of the synchronous motor (19), a partial output voltage is applied by means of controlled switches (81 to 83; 86, 87) acting on the primary or the secondary side, for reduction of the maximum frequency converter output voltage on the transformer (80; 85), and the synchronous motor (19) is controlled by the regulating and controlling device (36) in the range of the speed which results from the maximum motor supply voltage provided by the partial output voltage, up to the threshold speed of rotation and preferably up to the speed at which the torque characteristic (a) of the synchronous motor (19) intersects with the propeller characteristic (d) of the driving unit, with weakening of the exciter field of the synchronous motor (19).

11. Drive as per claim 10, characterized in that the component output voltage on the transformer (80; 85) can be switched on by means of the switches (81 to 83; 86, 87) on the primary or secondary side in several voltage steps.

12. Drive as per claim 10 or 11, characterized in that the three-phase network (10) is fed from several synchronous generators (14) and that the three-phase network (10) feeds into a ship's mains system (11) with shipboard consumers and that the apparent power of the synchronous generators (14) is dimensioned in accordance with the sum from the nominal reactive power of the frequency converters at nominal motor operation and the reactive power of the ship's mains (11) and in accordance with the sum from the active power of the frequency converters at nominal motor operation and the active power of the ship's mains (11).

## Revendications

1. Dispositif d'entraînement à convertisseurs pour des unités de travail comportant ce qu'on appelle une courbe caractéristique de propulseur, telles que des hélices de bateaux, des rotors de pompes, des roues de ventilateurs de grandes dimensions, et analogues, comportant un moteur synchrone (19), qui possède un ou deux enroulements statoriques, des mutateurs pour alimenter les enroulements statoriques à partir d'un réseau triphasé (10) et qui sont agencés soit sous la forme de mutateurs I (22,23) et comportent, du côté du réseau, en association avec un enroulement statorique respectif, deux convertisseurs (32,33) branchés en aval et formés par des interrupteurs à semiconducteurs commandés, selon un montage en pont triphasé, et un onduleur (34) situé du côté du moteur et relié à ce circuit en pont triphasé au moyen d'un circuit intermédiaire à courant continu et comportant des interrupteurs à semiconducteurs commandés branchés selon un montage en pont à courant triphasé, soit sous la forme de mutateurs D et comportent, en association avec respectivement une phase d'un enroulement statorique (46), deux convertisseurs (61,62) branchés en aval et formés respectivement de deux ponts triphasés (611,612 et 621,622) branchés selon un montage antiparallèle et comportant des interrupteurs à semiconducteurs commandés, et un dispositif de régulation et de commande (36) prévu pour les mutateurs et le moteur synchrone (19) et auquel est associé un régulateur (38) de la valeur de consigne de la vitesse de rotation, pouvant être actionné manuellement, caractérisé en ce qu'au-dessous d'une vitesse de rotation (vitesse de rotation limite) fixée à une valeur inférieure à la vitesse de rotation nominale du moteur synchrone (19), dans chacun des couples de convertisseurs formés par les convertisseurs (32,33; 61,62) branchés en série, un convertisseur (33;62) est court-circuité pour réduire la tension de sortie maximale du mutateur et le dispositif de régulation et de commande (36) fait fonctionner le moteur synchrone (19) dans la gamme de la vitesse de rotation, qui, pour la tension d'alimentation maximale du moteur, est fournie par les autres convertisseurs (32;61) non court-circuités, jusqu'à la vitesse de rotation limite, de préférence jusqu'à la vitesse de rotation, pour laquelle la courbe caractéristique (a) du couple du moteur synchrone (19) recoupe la courbe caractéristique de propulseur (d) de l'unité d'entraînement, avec affaiblissement du champ d'excitation du moteur synchrone (19).

2. Dispositif d'entraînement selon la revendication 1, caractérisé en ce que des interrupteurs de puissance commandables (29,29',30,30';52,53;57,57';66 à 68) sont prévus entre le réseau triphasé (10) et chacun des convertisseurs court-circuitables (33;62) et que pour le court-circuitage simultané de ces convertisseurs (33;62), une unité de commande (37), qui est intégrée dans le dispositif de régulation et de commande (36), ouvre les interrupteurs de puissance (29,29',30,30';52,53;57,57';66 à 68) et place à l'état conducteur les interrupteurs à semiconducteurs des convertisseurs (33;62).

3. Dispositif d'entraînement selon la revendication 1, caractérisé en ce qu'un pont de court-circuit (59;69) est branché en parallèle avec chacun des convertisseurs court-circuitables (33;61,62) et que pour le court-circuitage simultané de ces convertisseurs (33; 61,62), une unité de commande (37) intégrée dans le dispositif de régulation et de commande (36) bloque tous les interrupteurs à semiconducteurs de ces convertisseurs (33;61 ou 62) et ferme les ponts de court-circuit (59;69).

4. Dispositif d'entraînement selon la revendication 3, caractérisé en ce que, dans le cas de mutateurs (22,23) agencés sous la forme de mutateurs I, le pont de court-circuit (59,60) comporte un thyristor (54) branché en parallèle avec le convertisseur (33) et que dans le cas de mutateurs agencés sous la forme de mutateurs D, le pont de court-circuit comporte deux thyristors (70,71) branchés selon un montage antiparallèle avec le convertisseur (62 ou 61), et que les électrodes de commande du thyristor (54) ou des thyristors (70,71) sont reliées à l'unité de commande (37).

5. Dispositif d'entraînement selon l'une des revendications 2 à 4, caractérisé en ce que lorsque la vitesse de rotation (n) du moteur synchrone (19) tombe au-dessous de la vitesse de rotation limite, l'unité de commande (37) avant le court-circuitage du convertisseur respectif (33;62) réduit la tension de champ d'excitation du moteur synchrone (19) au point que la tension du moteur correspond approximativement à la tension maximale, servant à alimenter le moteur, de l'autre convertisseur (32;61) non court-circuité du couple de convertisseurs.

6. Dispositif d'entraînement selon l'une des revendications 1 à 5, caractérisé en ce que dans le cas d'un moteur synchrone (19) comportant seulement un enroulement statorique (46) et de mutateurs agencés sous la forme de mutateurs D, chacun des convertisseurs (61,62) ainsi qu'un redresseur de courant triphasé (21) pour l'enroulement d'excitation de champ (47) du moteur (79) sont connectés au réseau triphasé (10) par l'intermédiaire d'un transformateur (63 à 65,20) de convertisseur, et qu'une partie des transformateurs des convertisseurs possède des groupes identiques de commutation d'enroulements et une partie de ces transformateurs comporte des groupes non identiques de commutation d'enroulements sur le côté primaire ou sur le côté secondaire, et que les convertisseurs (62), qui peuvent être court-circuités simultanément, sont répartis entre les transformateurs de convertisseurs comportant des groupes identiques de commutation d'enroulements et des groupes non identiques de commutation d'enroulements, qu'un nombre identique des transformateurs de convertisseurs, associés aux convertisseurs non court-circuités (61), possède respectivement des groupes identiques de commutation d'enroulements et des groupes non identiques de commutation d'enroulements.

7. Dispositif d'entraînement selon l'une des revendications 1 à 6, caractérisé en ce que le moteur synchrone (19) est conçu pour un couple qui est supérieur au couple nominal et dispose par conséquent d'une plage d'affaiblissement de champ, qui est située juste au-dessous de la vitesse de rotation nominale (n_{N}), et que la gamme des vitesses de rotation, qui est parcourue par le dispositif de régulation et de commande (37) au-dessous de la vitesse de rotation limite avec affaiblissement du champ d'excitation du moteur synchrone (19), s'étend au moins jusqu'au début de la gamme des vitesses de rotation de l'affaiblissement de champ pour une tension d'alimentation complète du moteur.

8. Dispositif d'entraînement selon la revendication 7, caractérisé en ce que dans tous les couples de convertisseurs, les deux convertisseurs (61,62) branchés en série peuvent être court-circuités en alternance et que dans la gamme inférieure des vitesses de rotation, l'unité de commande (37) court-circuite les convertisseurs (61) auxquels est appliquée la tension secondaire plus élevée et, dans la gamme médiane des vitesses de rotation, court-circuite les convertisseurs (62) auxquels est appliquée la tension secondaire plus faible, dans les couples de convertisseurs.

9. Dispositif d'entraînement selon l'une des revendications 2 à 8 pour la propulsion d'un bateau, caractérisé en ce que le régulateur de la vitesse de rotation de consigne est un télégraphe de manoeuvre de déplacement (38), qui comporte un secteur (391) de réglage d'un levier de commande pour un "déplacement avec économie d'énergie" et un secteur (392) de réglage du levier de commande pour un "déplacement en puissance", qui s'étendent respectivement à partir des deux côtés jusqu'à la vitesse de rotation limite, et que l'unité de commande (37) est activée, lors du réglage du levier de commande (39) sur le secteur (391) de réglage du levier de commande pour le "déplacement avec économie d'énergie".

10. Dispositif d'entraînement à convertisseurs pour des unités de travail comportant ce qu'on appelle une courbe caractéristique de propulseur, telles que des hélices de bateaux, des rotors de pompes, des rotors de ventilateurs de grandes dimensions, et analogues, comportant un moteur synchrone (19), qui possède un ou deux enroulements statoriques, des mutateurs qui servent à alimenter les enroulements statoriques à partir d'un réseau triphasé (10) par l'intermédiaire de transformateurs (80; 85) et sont constitués soit par des mutateurs I comportant un circuit intermédiaire à courant continu, soit sous la forme de mutateurs D comportant des ponts triphasés branchés selon un montage antiparallèle, et un dispositif de régulation et de commande (36) qui est prévu pour un mutateur et un moteur synchrone (19) et auquel est associé un régulateur (38) de la valeur de consigne de la vitesse de rotation, qui peut être actionné manuellement, caractérisé en ce qu'au-dessous d'une vitesse de rotation (vitesse de rotation limite) fixée à une valeur inférieure à la vitesse de rotation nominale du moteur synchrone (19), pour réduire la tension de sortie maximale du mutateur, une tension de sortie partielle est appliquée au transformateur (80;85) au moyen d'interrupteurs commandés (80 à 83; 86,87) agissant sur le côté primaire ou sur le côté secondaire et le dispositif de régulation et de commande (36) fait fonctionner le moteur synchrone (19), au voisinage de la vitesse de rotation, que l'on obtient pour la tension d'alimentation maximale du moteur, diminuée de la tension de sortie partielle, jusqu'à la vitesse de rotation limite, de préférence jusqu'à la vitesse de rotation, pour laquelle la courbe caractéristique (a) du couple du moteur synchrone (19) recoupe la courbe caractéristique de propulseur (d) de l'unité d'entraînement, avec affaiblissement du champ d'excitation du moteur synchrone (19).

11. Dispositif d'entraînement selon la revendication 10, caractérisé en ce que la tension de sortie partielle peut être appliquée au transformateur (80;85) à l'aide des interrupteurs (81 à 83; 86,87) situés sur le côté primaire ou sur le côté secondaire, selon plusieurs échelons de tension.

12. Dispositif d'entraînement selon la revendication 10 ou 11, caractérisé en ce que le réseau triphasé (10) est alimenté par une multiplicité de générateurs synchrones (14), et un réseau de bord (11) du bateau comportant des appareils d'utilisation dans le réseau de bord est alimenté à partir du réseau triphasé (10) et que la puissance apparente des générateurs synchrones (14) est réglée conformément à la somme de la puissance réactive nominale des mutateurs pour le fonctionnement nominal du moteur et de la puissance réactive du réseau de bord (11) ainsi qu'à la somme de la puissance active nominale des mutateurs lors du fonctionnement nominal du moteur et de la puissance active du réseau de bord (11).
